# EUROPÄISCHE PATENTSCHRIFT

(11) **EP 4 126 609 B1**
(45) Veröffentlichungstag und Bekanntmachung des Hinweises auf die Patenterteilung: **22.05.2024**
(21) Anmeldenummer: 21709398.8
(22) Anmeldetag: 01.03.2021
(51) Int. Cl.: B60T 8/17, B60T 8/32, B60T 13/68

(54) **ELEKTRONISCH GESTEUERTES BETRIEBSBREMSSYSTEM MIT AUF DER BASIS EINES WEITEREN DRUCKLUFTVERBRAUCHERKREISES ERZEUGTEM BACKUP-STEUERDRUCK**
ELECTRONICALLY CONTROLLED SERVICE BRAKE SYSTEM WITH BACKUP CONTROL PRESSURE GENERATED ON THE BASIS OF A FURTHER COMPRESSED AIR CONSUMER CIRCUIT
SYSTÈME DE FREIN DE SERVICE À CONTRÔLE ÉLECTRONIQUE AVEC PRESSION DE CONTRÔLE DE SECOURS GÉNÉRÉE SUR LA BASE D'UN AUTRE CIRCUIT DE CONSOMMATION D'AIR COMPRIMÉ

(30) Priorität: 24.03.2020 DE 102020108072
(43) Veröffentlichungstag der Anmeldung: 08.02.2023
(73) Patentinhaber: KNORR-BREMSE Systeme für Nutzfahrzeuge GmbH, 80809 München (DE)
(72) Erfinder: HECKER, Falk, 71706 Markgröningen (DE); JUNDT, Oliver, 74394 Hessigheim (DE); RÖTHER, Friedbert, 74389 Cleebronn (DE)
(86) Internationale Anmeldenummer: PCT/EP2021/055075
(87) Internationale Veröffentlichungsnummer: WO 2021/190869

(56) Entgegenhaltungen:
- WO-A1-2018/172268
- WO-A2-2009/152982
- DE-A1- 10 320 608

## Beschreibung

Die Erfindung betrifft ein elektronisch gesteuertes pneumatisches Betriebsbremssystem gemäß dem Oberbegriff von Anspruch 1.

Ein elektronisch gesteuertes pneumatisches Betriebsbremssystem ist aus EP 3 344 503 B1 bekannt. Bei dem bekannten Bremssystem ist ein erstes Bremsventil in Form eines Fußbremsventils mit einem elektrischen Kanal und zwei pneumatischen Kanälen durch einen ersten Druckluftvorrat und ein zweites Bremsventil in Form eines 2-Kanal-Druckregelmoduls durch einen zweiten Druckluftvorrat druckluftversorgt. Abhängig von einer Betätigung eines Fußbremspedals des ersten Bremsventils erzeugt dieses in seinen beiden pneumatischen Kanäle erste Bremsventil-Steuerdrücke für ein erstes Steuerventil an der Vorderachse und für ein zweites Steuerventil an der Hinterachse. Parallel werden im Sinne einer Redundanz durch das zweite Bremsventil in seinen beiden Kanälen zweite Bremsventil-Steuerdrücke für das erste Steuerventil an der Vorderachse und für das zweite Steuerventil an der Hinterachse erzeugt. Dabei wird entweder der jeweils größere Steuerdruck zwischen den ersten Bremsventil-Steuerdrücken und den zweiten Bremsventil-Steuerdrücken oder eine Summe aus beiden an das erste Steuerventil und an das zweite Steuerventil ausgegeben. Durch den genannten Aufbau wird zwar eine elektrische und pneumatische Redundanz zur Verfügung gestellt, der Bau- und Montageaufwand ist demgegenüber relativ groß. Ein gattungsbildendes elektronisch gesteuertes pneumatisches Betriebsbremssystem ist aus DE 103 20 608 A1 bekannt.

Der vorliegenden Erfindung liegt demgegenüber die Aufgabe zugrunde, ein elektronisch gesteuertes pneumatisches Betriebsbremssystem derart weiter zu bilden, dass sich eine höhere Ausfallsicherheit ergibt.

Diese Aufgabe wird erfindungsgemäß durch die Merkmale von Anspruch 1 gelöst.

### Offenbarung der Erfindung

Die Erfindung geht aus von einem elektronisch gesteuerten pneumatischen Betriebsbremssystem, welches wenigstens Folgendes aufweist:
a) Eine erste elektronische Steuerung (EBS-ECU),
b) einen ersten Bremskreis mit einem ersten Druckluftvorrat und mit einem ersten Steuerventil (1C-EPM),
c) einen zweiten Bremskreis mit einem zweiten, von dem ersten Druckluftvorrat (C1) unabhängigen Druckluftvorrat (C2) und mit einem zweiten Steuerventil (2C-EPM), wobei der erste Bremskreis von dem ersten Druckluftvorrat (C1) und der zweite Bremskreis von dem zweiten Druckluftvorrat (C2) druckluftversorgt ist, wobei
d) in dem ersten Bremskreis auf der Basis von Druckluft aus dem ersten Druckluftvorrat durch das erste Steuerventil (1C-EPM) wenigstens ein erster Bremsdruck an wenigstens einem ersten pneumatischen Arbeitsausgang des ersten Steuerventils (1C-EPM) einstellbar ist und in dem zweiten Bremskreis auf der Basis von Druckluft aus dem zweiten Druckluftvorrat durch das zweite Steuerventil (2C-EPM) wenigstens ein zweiter Bremsdruck an wenigstens einem zweiten pneumatischen Arbeitsausgang des zweiten Steuerventils (2C-EPM) einstellbar ist, wobei an dem ersten pneumatischen Arbeitsausgang wenigstens ein pneumatischer Betriebsbremsaktuator des ersten Bremskreises und an dem zweiten pneumatischen Arbeitsausgang wenigstens ein pneumatischer Betriebsbremsaktuator des zweiten Bremskreises angeschlossen ist, und wobei
e) das erste Steuerventil (1C-EPM) einen ersten elektrischen Steuereingang zum Aufnehmen eines ersten elektrischen Steuersignals und einen ersten pneumatischen Steuereingang zum Aufnehmen eines ersten pneumatischen Steuerdrucks und das zweite Steuerventil (2C-EPM) einen zweiten elektrischen Steuereingang zum Aufnehmen eines zweiten elektrischen Steuersignals und einen zweiten pneumatischen Steuereingang zum Aufnehmen eines zweiten pneumatischen Steuerdrucks aufweist, und wobei
f) die erste elektronische Steuerung (EBS-ECU) abhängig von einer Fahrzeug-Sollverzögerung das erste elektrische Steuersignal erzeugt und in den ersten elektrischen Steuereingang des ersten Steuerventils (1C-EPM) einsteuert und das zweite elektrische Steuersignal erzeugt und in den zweiten elektrischen Steuereingang des zweiten Steuerventils einsteuert, und wobei
g) Steuersignalerzeugungsmittel vorgesehen sind, welche abhängig von der Fahrzeug-Sollverzögerung den ersten pneumatischen Steuerdruck erzeugen und in den ersten pneumatischen Steuereingang des ersten Steuerventils einsteuern und den zweiten pneumatischen Steuerdruck erzeugen und in den zweiten pneumatischen Steuereingang des zweiten Steuerventils einsteuern,

Die Steuersignalerzeugungsmittel können beispielsweise pneumatisch-mechanisch oder pneumatisch-elektrisch betätigt ausgeführt sein.

Gemäß einem ersten Aspekt der Erfindung ist dann vorgesehen, dass
h) wenigstens ein von dem ersten Bremskreis und dem zweiten Bremskreis unabhängiger dritter Druckluftverbraucherkreis vorgesehen ist, welcher von wenigstens einem dritten Druckluftvorrat (C3) druckluftversorgt ist, der unabhängig von dem ersten Druckluftvorrat (C1) und dem zweiten Druckluftvorrat (C2) ist, wobei
i) ein pneumatischer Versorgungsanschluss der Steuersignalerzeugungsmittel von einem dritten Vorratsdruck des dritten Druckluftvorrats (C3) druckluftversorgt ist, und dass
j) die Steuersignalerzeugungsmittel ausgebildet sind, dass sie auf der Basis des an dem Versorgungsanschluss anstehenden dritten Vorratsdrucks den ersten pneumatischen Steuerdruck erzeugen und in den ersten pneumatischen Steuereingang einsteuern sowie den zweiten pneumatischen Steuerdruck erzeugen und in den zweiten pneumatischen Steuereingang einsteuern.

Gemäß einem zweiten Aspekt der Erfindung ist vorgesehen, dass
h) wenigstens ein von dem ersten Bremskreis und dem zweiten Bremskreis unabhängiger dritter Druckluftverbraucherkreis vorgesehen ist, welcher von wenigstens einem dritten Druckluftvorrat (C3) druckluftversorgt ist, der unabhängig von dem ersten Druckluftvorrat (C1) und dem zweiten Druckluftvorrat (C2) ist, wobei
i) ein pneumatischer Versorgungsanschluss der Steuersignalerzeugungsmittel von dem jeweils größeren Vorratsdruck zwischen einem ersten Vorratsdruck in dem ersten Druckluftvorrat (C1) und einem zweiten Vorratsdruck in dem zweiten Druckluftvorrat (C2) druckluftversorgt ist, und dass
j) die Steuersignalerzeugungsmittel ausgebildet sind, dass sie auf der Basis des an dem Versorgungsanschluss anstehenden ersten oder zweiten Vorratsdrucks den ersten pneumatischen Steuerdruck erzeugen und in den ersten pneumatischen Steuereingang einsteuern sowie den zweiten pneumatischen Steuerdruck erzeugen und in den zweiten pneumatischen Steuereingang einsteuern.

Bei der Druckluftversorgung eines pneumatischen Betriebsbremssystem wird regelmäßig ein Mehrkreissicherheitsventil eingesetzt, welches kreisgetrennt die Druckluftvorräte der Druckluftverbraucherkreise wie hier dem ersten Bremskreis, dem zweiten Bremskreis und dem dritten Druckluftverbraucherkreis mit der von einem Kompressor geförderten Druckluft versorgt. Folglich hat ein Leck in einem der Druckluftvorräte oder in einem Druckluftverbraucherkreise keinen Einfluss auf intakte Druckluftverbraucherkreise.

Die Erfindung nutzt daher die Unabhängigkeit der Druckluftvorräte bzw. der Druckluftverbraucherkreise für eine möglichst ökonomische Ausbildung von nachrangigen pneumatischen oder elektro-pneumatischen Redundanz-Bremskreisen, welche eine Redundanz den vorrangigen elektro-pneumatischen Betriebsbremskreis bilden.

Da ein dritter Druckluftvorrat für Nebenverbraucher wie beispielsweise eine pneumatische Luftfederungseinrichtung oder für einen pneumatischen Parkbremskreis in der Regel auf Nutzfahrzeugen mit elektronisch gesteuerten pneumatischen Betriebsbremssystemen vorhanden sind, nutzt die Erfindung vorteilhaft auf einem Nutzfahrzeug bereits vorhandene Drucklufteinrichtungen.

Dabei kann gemäß bevorzugter Ausführungsformen ein pneumatischer Kanal eines Fußbremsmoduls von üblicherweise zwei pneumatischen Kanälen entfallen, weil beispielsweise der erste pneumatische Steuerdruck und der zweite pneumatische Steuerdruck als gemeinsamer pneumatischer Steuerdruck für die beiden Steuerventile heranzogen werden, wobei der dann einzige pneumatische Kanal dann entweder - einerseits von dem dritten Druckluftvorrat - oder - andererseits von dem ersten Druckluftvorrat oder von dem zweiten Druckluftvorrat - druckluftversorgt wird.

Falls daher im ersten Fall (einerseits) der erste Druckluftvorrat und/oder der zweite Druckluftvorrat oder die zugeordneten pneumatischen Versorgungsleitungen ein Leck aufweisen, so wird der gemeinsame pneumatischer Steuerdruck für die beiden Steuerventile auf der Basis des dritten Vorratsdrucks des dritten Druckluftvorrats in dem einzigen pneumatischen Kanal des Fußbremsmoduls erzeugt.

Falls daher im zweiten Fall (andererseits) der erste Druckluftvorrat oder der zweite Druckluftvorrat oder die zugeordneten pneumatischen Versorgungsleitungen ein Leck aufweisen, so wird der gemeinsame pneumatischer Steuerdruck für die beiden Steuerventile dann auf der Basis des ersten oder zweiten Vorratsdrucks des jeweils intakten ersten oder zweiten Druckluftvorrats in dem einzigen pneumatischen Kanal des Fußbremsmoduls erzeugt.

Unter einem gemeinsamen pneumatischen Steuerdruck für die beiden Steuerventile soll daher verstanden werden, dass der erste pneumatische Steuerdruck und der zweite pneumatische Steuerdruck im Wesentlichen den gleichen Druckwert aufweisen.

Durch die genannten Maßnahmen werden Redundanzen bezüglich der Druckluftversorgung bei der Erzeugung des gemeinsamen pneumatischen Steuerdrucks zur Verfügung gestellt, mit der Möglichkeit zur Einsparung eines pneumatischen Kanals bei dem Fußbremsmodul samt pneumatischer Verrohrung.

Bei diesen ein Fußbremsmodul mit einem (bevorzugt einzigen) pneumatischen Kanal aufweisenden Ausführungsformen bestehen dann die Steuersignalerzeugungsmittel in dem (bevorzugt einzigen) pneumatischen Kanal des Fußbremsmoduls und sind dann durch das Fußbremspedal pneumatisch-mechanisch betätigt.

Gemäß weiteren Ausführungsformen wird der gemeinsame pneumatische Steuerdruck für die beiden Steuerventile durch elektro-pneumatische Signalerzeugungsmittel erzeugt, welche eine zweite elektronische Steuerung und eine von dieser gesteuerte Magnetventileinrichtung umfassen, welche an dem Versorgungsanschluss einerseits entweder von dem ersten Druckluftvorrat oder dem zweiten Druckluftvorrat oder andererseits von dem dritten Druckluftvorrat druckluftversorgt wird, wodurch wiederum eine Redundanz hinsichtlich der Druckluftversorgung gewährleistet wird.

Diese zweite elektronische Steuerung stellt wie die erste elektronische Steuerung bevorzugt eine elektronische Bremssteuerung dar, so dass die zweite elektronische Steuerung eine elektronische Redundanz in Bezug auf eine elektrische Steuerung und/oder Regelung der Betriebsbremssystems darstellt.

Dabei kann die zweite elektronische Steuerung abhängig von einem zweiten elektrischen Bremsanforderungssignal gesteuert werden, welches entweder in einem zweiten elektrischen Kanal des Fußbremsmoduls abhängig von einer Betätigung des Fußbremspedals erzeugt wird, oder welches von einem Fahrerassistenzsystem wie einem Notbremsassistenten oder einer Autopiloteinrichtung insbesondere automatisch erzeugt wird.

In den Unteransprüchen sind vorteilhafte Weiterbildungen der in Anspruch 1 angegebenen Erfindung möglich.

Bevorzugt kann die Fahrzeug-Sollverzögerung durch eine Betätigung eines Fußbremspedals eines Fußbremsmoduls und/oder von einer Autopiloteinrichtung und/oder von einem Fahrerassistenzsystem vorgegeben wird. Dabei kann vorgesehen sein, dass sowohl durch eine Betätigung des Fußbremspedals des Fußbremsmoduls als auch von einem Fahrerassistenzsystem oder von einer Autopiloteinrichtung jeweils ein Wert für die Fahrzeug-Sollverzögerung vorgegeben wird und dann der jeweils größere Wert für die Erzeugung des ersten elektrischen Steuersignals, des zweiten elektrischen Steuersignals, des ersten pneumatischen Steuerdrucks und des zweiten pneumatischen Steuerdrucks herangezogen wird.

Bevorzugt sind Auswahlmittel vorgesehen, welche den jeweils größeren Druck zwischen dem ersten Vorratsdruck und dem zweiten Vorratsdruck an den Versorgungsanschluss der pneumatischen Steuersignalerzeugungsmittel steuern. Diese Auswahlmittel umfassen bevorzugt ein pneumatisches Wechselventil, von welchem ein erster Eingangsanschluss an den ersten Druckluftvorrat und ein zweiter Eingangsanschluss an den zweiten Druckluftvorrat und ein Ausgangsanschluss an den Versorgungsanschluss der pneumatischen Steuersignalerzeugungsmittel angeschlossen ist.

Bei dem Fußbremsmodul (FBM) ist wenigstens ein elektrischer Kanal zum betätigungsabhängigen Erzeugen eines elektrischen Bremsanforderungssignals vorhanden. Zusätzlich kann wenigstens ein pneumatischer Kanal zum betätigungsabhängigen Erzeugen eines pneumatischen Steuerdrucks vorhanden sein. Vorzugsweise umfasst das Fußbremsmodul (FBM) lediglich einen einzigen pneumatischen Kanal, in welchem betätigungsabhängig der gemeinsame pneumatische Steuerdruck für das erste Steuerventil und das zweite Steuerventil erzeugt wird.

Dabei kann das Fußbremsmodul (FBM) einen ersten elektrischen Kanal umfassen, in dem abhängig von der Betätigung des Fußbremspedals ein erstes elektrisches Bremsanforderungssignal erzeugt und in die erste elektronische Steuerung (EBS-ECU) einsteuert wird, welche abhängig von dem ersten Bremsanforderungssignal das erste elektrische Steuersignal erzeugt und in den ersten elektrischen Steuereingang einsteuert und das zweite elektrische Steuersignal erzeugt und in den zweiten elektrischen Steuereingang einsteuert.

Wie oben bereits ausgeführt, kann das Fußbremsmodul (FBM) wenigstens einen pneumatischen Kanal, insbesondere lediglich einen einzigen pneumatischen Kanal umfassen, der von den Steuersignalerzeugungsmitteln umfasst und durch den Versorgungsanschluss druckluftversorgt ist und abhängig von der Betätigung des Fußbremspedals dann den ersten pneumatischen Steuerdruck erzeugt und in den ersten pneumatischen Steuereingang einsteuert und den zweiten pneumatischen Steuerdruck erzeugt und in den zweiten pneumatischen Steuereingang einsteuert. Im Falle eines einzigen pneumatischen Kanals wird dann dort der gemeinsame pneumatische Steuerdruck für das erste und zweite Steuerventil erzeugt.

Auch kann das Fußbremsmodul (FBM) einen zweiten elektrischen Kanal umfassen, in welchem abhängig von der Betätigung des Fußbremspedals ein zweites elektrisches Bremsanforderungssignal erzeugt wird.

Zusätzlich oder alternativ kann die Autopiloteinrichtung oder das Fahrerassistenzsystem abhängig von der Fahrzeug-Sollverzögerung das erste elektrische Bremsanforderungssignal erzeugen und in die erste elektronische Steuerung (EBS-ECU) einsteuern, welche abhängig von dem ersten Bremsanforderungssignal das erste elektrische Steuersignal erzeugt und in den ersten elektrischen Steuereingang einsteuert und das zweite elektrische Steuersignal erzeugt und in den zweiten elektrischen Steuereingang einsteuert, und auch das zweite elektrische Bremsanforderungssignal erzeugen und in die zweite elektronische Steuerung (EBS-ECU-Redundant) einsteuern.

Daher kann das zweite elektrische Bremsanforderungssignal durch den zweiten elektrischen Kanal des Fußbremsmoduls und/oder durch die Autopiloteinrichtung und/oder durch das Fahrerassistenzsystem abhängig der von der Fahrzeug-Sollverzögerung erzeugt vorgegeben werden.

Gemäß einer Weiterbildung können die Signalerzeugungsmittel eine Magnetventileinrichtung sowie eine zweite elektronische Steuerung (EBS-ECU-Redundant) umfassen, welche abhängig von einem oder dem zweiten elektrischen Bremsanforderungssignal ein drittes elektrisches Steuersignal erzeugt und in die Magnetventileinrichtung einsteuert, welche dann abhängig von dem dritten elektrischen Steuersignal den ersten pneumatischen Steuerdruck erzeugt und in den ersten pneumatischen Steuereingang einsteuert und den zweiten pneumatischen Steuerdruck erzeugt und in den zweiten pneumatischen Steuereingang einsteuert.

Dabei können die erste elektronische Steuerung EBS-ECU von einer ersten elektrischen Energieversorgung und die zweite elektronische Steuerung EBS-ECU-Redundant wie auch die Magnetventileinrichtung von einer zweiten elektrischen Energieversorgung mit elektrischer Energie versorgt werden, welche unabhängig von der ersten elektrischen Energieversorgung ist.

Dabei kann die zweite elektronische Steuerung (EBS-ECU-Redundant) eine Redundanz für die erste elektronische Steuerung (EBS-ECU) ausbildet, wenn die erste elektronische Steuerung (EBS-ECU) oder eine elektrische Energieversorgung der ersten elektronischen Steuerung (EBS-ECU) einen Fehler aufweist oder ausgefallen ist und dann der wenigstens eine erste Bremsdruck auf der Basis des ersten pneumatischen Steuerdrucks und der wenigstens eine zweite Bremsdruck auf der Basis des zweiten pneumatischen Steuerdrucks erzeugt werden.

Insbesondere wird die erste elektronische Steuerung (EBS-ECU) von einer ersten elektrischen Energiequelle (z.B. Batterie, Akkumulator) mit elektrischer Energie versorgt, welche unabhängig von einer zweiten elektrischen Energiequelle (z.B. Batterie, Akkumulator) ist. Insbesondere können die erste elektronische Steuerung (EBS-ECU) und auch der erste elektrische Kanal des Fußbremsmoduls von der ersten elektrischen Energieversorgung und die zweite elektronische Steuerung (EBS-ECU-Redundant), die Magnetventileinrichtung wie auch der zweite elektrische Kanal des Fußbremsmoduls FBM von der zweiten elektrischen Energieversorgung mit elektrischer Energie versorgt werden. Beide elektrischen Energiequellen können an ein Bordnetz des Nutzfahrzeugs angeschlossen sein.

Insbesondere ist die Magnetventileinrichtung von dem Versorgungsanschluss (der Signalerzeugungsmittel) druckluftversorgt und umfasst eine Einlass/-Auslass-Magnetventilkombination zum vom dritten elektrischen Steuersignal abhängigen Erhöhen, Halten und Senken des ersten pneumatischen Steuerdrucks und des zweiten pneumatischen Steuerdrucks. Die Einlass-/Auslass-Magnetventilkombination kann insbesondere zwei 2-Wege-Magnetventile, ein Einlass-Magnetventil und ein Auslass-Magnetventil, mit je einer Sperr- und Durchlassstellung beinhalten, wobei das Auslassventil einen Entlüftungsanschluss aufweist.

Auch können die Signalerzeugungsmittel wenigstens einen Drucksensor umfassen, welcher einen dem von der Magnetventileinrichtung ausgesteuerten ersten pneumatischen Steuerdruck und/oder zweiten pneumatischen Steuerdruck entsprechenden Ist-Druckwert an die zweite elektronische Steuerung (EBS-ECU-Redundant) meldet, welche in einem geschlossenen Regelkreis die Magnetventileinrichtung steuert, um den Ist-Druckwert auf einen Soll-Druckwert zu regeln, welcher abhängig von dem zweiten elektrischen Bremsanforderungssignal ist.

Damit kann durch die dann vorliegende nachrangige elektro-pneumatische Redundanz eine gemeinsame Regelung des Bremsdrucks für beide Bremskreise realisiert werden.

Die Steuersignalerzeugungsmittel können ausgebildet sein, dass sie den ersten pneumatischen Steuerdruck und/oder den zweiten pneumatischen Steuerdruck in einen pneumatischen Steuereingang eines elektro-pneumatischen Anhängersteuermoduls (TCM) zur Steuerung der Bremsen eines Anhängers einsteuern, wobei das Anhängersteuermodul (TCM) insbesondere vorrangig durch elektrische Steuersignale der ersten elektronischen Steuerung (EBS-ECU) elektrisch gesteuert ist. Dann bilden der erste pneumatischen Steuerdruck und/oder der zweite pneumatischen Steuerdruck bzw. der gemeinsame pneumatische Steuerdruck eine pneumatische Redundanz zur Steuerung der Anhängerbremsen.

Insbesondere kann das erste elektrische Steuersignal einen ersten Soll-Wert für den ersten Bremsdruck und das zweite elektrische Steuersignal einen zweiten Soll-Wert für den zweiten Bremsdruck repräsentiert. Dann kann in jedem Bremskreis getrennt ein eigener unabhängiger Sollwert für den Bremsdruck vorgegeben werden. Wenn beispielsweise der erste Bremskreis ein Vorderachsbremskreis und der zweite Bremskreis ein Hinterachsbremskreis ist, dann kann in jedem Bremskreis ein jeweils anderer Sollwert für den Bremsdruck vorgegeben werden, welcher beispielsweise abhängig von der Achslastverteilung des Fahrzeugs ist.

Ist-Werte für den Bremsdruck oder für die Bremsdrücke werden bevorzugt durch 1-kanalige oder mehrkanalige Druckregelmodule auf den (die) vorgegebenen Soll-Wert(e) für den Bremsdruck oder die Bremsdrücke geregelt. Dabei kann beispielsweise bremsschlupfabhängig in jedem Kanal eine unabhängige Regelung stattfinden, wobei beispielsweise bei einem einer Achse zugeordneten 2-Kanal-Druckregelmodul in dem einem Kanal der Bremsdruck für die Radbremse des rechten Rads und in dem anderen Kanal der Bremsdruck des linken Rads getrennt geregelt werden können. Bei einem 1-Kanal-Druckregelmodul an einer Achse kann eine Regelung des Bremsdrucks dann gemeinsam stattfinden, wobei zwischen dem 1-Kanal-Druckregelmodul und den pneumatischen Bremszylindern rechts und links dann jeweils ein ABS-Drucksteuerventil PCV angeordnet sein kann, um den Bremsdruck seitenweise bremsschlupfregeln zu können.

Bevorzugt wird daher das erste Steuerventil (1C-EPM) und/oder das zweite Steuerventil (2C-EPM) wenigstens durch Folgendes gebildet oder beinhaltet wenigstens Folgendes: Ein 1-Kanal-Druckregelmodul oder ein 2-Kanal-Druckregelmodul.

Je Kanal kann ein solches bevorzugt als Baueinheit ausgeführtes Druckregelmodul Folgendes beinhalten: Ein Relaisventil, eine Einlass-/Auslass-Magnetventilkombination, welche das Relaisventil pneumatisch vorsteuert, ein an den (ersten oder zweiten) elektrischen Steuereingang angeschlossenes elektronisches Steuergerät, welches abhängig von dem in den (ersten oder zweiten) elektrischen Steuereingang eingesteuerten (ersten oder zweiten) elektrischen Steuersignal die Einlass-/Auslassventil-Magnetkombination elektrisch ansteuert, um einen pneumatischen Vorsteuerdruck für das Relaisventil zu erzeugen, welches dann abhängig von dem pneumatischen Vorsteuerdruck einen Ist-Wert für den (ersten oder zweiten) Bremsdruck erzeugt. Weiterhin kann ein Drucksensor in das Druckregelmodul integriert sein, welcher den Ist-Wert des Bremsdrucks an das wenigstens eine elektronische Steuergerät meldet, damit dieses die Einlass-/Auslassventil-Magnetkombination elektrisch ansteuert, um den Ist-Wert an den Soll-Wert für den Bremsdruck anzugleichen. In dem elektronischen Steuergerät sind dann die Routinen für die Bremsdruckregelung implementiert. Besonders bevorzugt ist auch ein von dem elektronischen Steuergerät elektrisch gesteuertes und bevorzugt als 2/2-Wege-Magnetventil ausgeführtes Backup-Ventil in dem Druckregelmodul integriert, welches unbestromt eine Verbindung zwischen dem (ersten oder zweiten) pneumatischen Steuereingang und dem (ersten oder zweiten) Arbeitsausgang schafft, damit der entsprechende (erste oder zweite) Steuerdruck das Druckregelmodul im Redundanzfall (d.h. bei ausgefallenem vorrangigem elektro-pneumatischem Bremskreis) passieren und in die pneumatischen Betriebsbremszylinder eingesteuert werden kann. Demgegenüber nimmt das Backup-Ventil bestromt, d.h. bei funktionsfähigem elektro-pneumatischem Bremskreis seine Sperrstellung ein und sperrt dann diese Verbindung.

Die Druckregelmodule und optional auch ABS-Drucksteuerventile können dann in ein elektronisch geregeltes Betriebsbremssystem mit Bremsdruckregelung (EBS) eingebunden sein, welches wenigstens die erste elektronische Steuerung (EBS-Bremssteuergerät) und das Fußbremsmodul umfasst. Die Druckregelmodule weisen Vorratseingänge auf, mit welchen sie von dem jeweiligen Druckluftvorrat druckluftversorgt werden und dann auf der Basis des jeweiligen Vorratsdrucks den Bremsdruck in dem jeweiligen Kanal modulieren.

Wie oben ausgeführt, kann der erste Bremskreis ein Vorderachsbremskreis und der zweite Bremskreis ein Hinterachsbremskreis sein. Dabei kann an der Vorderachse ein 1-Kanal-Druckregelmodul und an der Hinterachse ein 2-Kanal-Druckregelmodul angeordnet sein.

Daher können beispielsweise zwei erste Arbeitsausgänge (rechts-links) des ersten Steuerventils, welches beispielsweise durch ein 1-Kanal-Druckregelmodul gebildet wird, mit jeweils einem ersten pneumatischen Betriebsbremszylinder (rechts-links) und zwei zweite Arbeitsausgänge (rechts-links) des zweiten Steuerventils (2C-EPM), welches beispielsweise durch ein 2-Kanal-Druckregelmodul gebildet wird, mit jeweils einem zweiten pneumatischen Betriebsbremszylinder verbunden sein.

Wie oben ausgeführt, kann der dritte Druckluftverbraucherkreis ein Nebenverbraucherkreis sein, welcher beispielsweise eine elektro-pneumatische Luftfederungseinrichtung umfasst, oder auch ein Anhängerbremskreis, welcher das Anhängersteuermodul und einen Kopplungskopf "Vorrat" mit Druckluft versorgt. Auf der Basis des dritten Vorratsdrucks in dem dritten Druckluftvorrat des dritten Druckluftverbraucherkreises moduliert dann das Anhängersteuermodul den Anhängerbremsdruck für den Kupplungskopf "Bremse". Alternativ können das Anhängersteuermodul und der Kupplungskopf "Vorrat" auch durch den ersten Druckluftvorrat und/oder den zweiten Druckluftvorrat mit Druckluft versorgt werden.

Die Steuersignalerzeugungsmittel sind beispielsweise ausgebildet, dass sie den ersten pneumatischen Steuerdruck und den zweiten pneumatischen Steuerdruck als einen gemeinsamen pneumatischen Steuerdruck für den ersten Bremskreis und für den zweiten Bremskreis erzeugen und aussteuern.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: ein schematisches Schaltbild eines elektronisch gesteuerten pneumatischen Betriebsbremssystems eines Nutzfahrzeugs gemäß einer ersten Ausführungsform der Erfindung;
- Fig. 2: ein schematisches Schaltbild eines elektronisch gesteuerten pneumatischen Betriebsbremssystems eines Nutzfahrzeugs gemäß einer zweiten Ausführungsform der Erfindung;
- Fig. 3: ein schematisches Schaltbild eines elektronisch gesteuerten pneumatischen Betriebsbremssystems eines Nutzfahrzeugs gemäß einer dritten Ausführungsform der Erfindung;
- Fig. 4: ein schematisches Schaltbild eines elektronisch gesteuerten pneumatischen Betriebsbremssystems eines Nutzfahrzeugs gemäß einer vierten Ausführungsform der Erfindung;

### Beschreibung der Ausführungsbeispiele

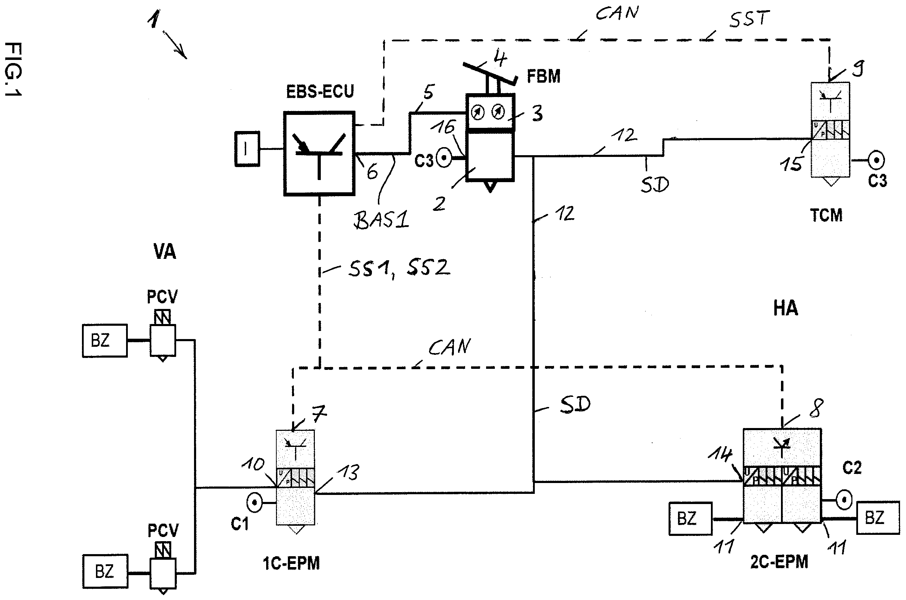

In **Fig.1** ist ein erste Ausführungsform eines elektronisch gesteuerten pneumatischen Betriebsbremssystems 1 eines Nutzfahrzeugs gezeigt, welches insbesondere ein elektronisch geregeltes Betriebsbremssystem mit Bremsdruckregelung (EBS) beinhaltet.

Das EBS umfasst hier einen Vorderachsbremskreis als ersten Betriebsbremskreis und einen Hinterachsbremskreis als zweiten Betriebsbremskreis. Weiterhin beinhaltet das EBS ein Fußbremsmodul FBM, welches aber nicht wie üblich für jeden Bremskreis einen pneumatischen Kanal aufweist, sondern hier lediglich einen einzigen pneumatischen Kanal 2 für beide Betriebsbremskreise, der wie üblich von einem Fußbremsventil betätigt wird. Weiterhin umfasst das Fußbremsmodul FBM auch einen ersten elektrischen Kanal 3 mit wenigstens einem elektrischen Bremswertgeber welches die Betätigung des Pedalwegs oder Pedalwinkels über ein Weg- oder Winkelmesssystem misst, wobei sowohl das Fußbremsventil als auch der elektrische Bremswertgeber von einem Fußbremspedal 4 betätigt werden. Der elektrische Bremswertgeber erzeugt dann abhängig von einer Betätigung des Fußbremspedals 4 ein erstes elektrisches Bremsanforderungssignal BAS1 und der pneumatische Kanal 2 einen gemeinsamen pneumatischen Steuerdruck SD für den Vorderachsbremskreis und den Hinterachsbremskreis. Durch die jeweilige Betätigung des Fußbremspedals 4 wird daher eine gewünschte Fahrzeug-Sollverzögerung durch den Fahrer vorgegeben.

Das erste elektrische Bremsanforderungssignal BAS1 wird dann durch eine Signalleitung 5 in einen ersten elektrischen Eingang 6 einer ersten elektronischen Steuerung EBS-ECU eingesteuert, welches hier beispielsweise durch ein zentrales EBS-Steuergerät des EBS gebildet wird.

In der EBS-ECU sind Routinen implementiert, welche für den Vorderachsbremskreis ein erstes elektrisches Steuersignal SS1, für den Hinterachsbremskreis ein zweites elektrisches Steuersignal SS2 und für einen Anhängerbremskreis ein elektrisches Anhängersteuersignal SST erzeugen, wobei die elektrischen Steuersignale SS1, SS2 und SST jeweils Soll-Werte für den jeweiligen Bremsdruck im Vorderachsbremskreis, im Hinterachsbremskreis und in einem Anhängerbremskreis repräsentieren. Die Sollwerte können dabei unterschiedlich sein, beispielsweise abhängig von einer Achslastverteilung, die am Nutzfahrzeug bestimmt wird.

Die elektrischen Steuersignale SS1, SS2 und SST werden dann von der EBS-ECU beispielsweise in einen Bremsen-CAN eingesteuert, an welchen ein bereits oben beschriebenes, an der Vorderachse angeordnetes 1-Kanal-Druckregelmodul 1C-EPM mit einem ersten elektrischen Steuereingang 7, ein ebenfalls bereits oben beschriebenes, an der Hinterachse angeordnetes 2-Kanal-Druckregelmodul 2C-EPM mit einem zweiten elektrischen Steuereingang 8 sowie ein Anhängersteuermodul TCM mit einem dritten elektrischen Steuereingang 9 angeschlossen ist.

Das Anhängersteuermodul TCM ist wie ein Druckregelmodul aufgebaut und beispielsweise 1-kanalig ausgeführt. Es verfügt hier beispielsweise auch über ein eigenes elektronisches Steuergerät. Abhängig von dem an seinem dritten elektrischen Steuereingang 9 anstehenden Anhängersteuersignal SST steuert es seine integrierten Magnetventile an, um einen pneumatischen Steuerdruck für das ebenfalls integrierte Relaisventil zu erzeugen, das dann einen entsprechenden Anhängerbremsdruck an einen hier nicht dargestellten Kupplungskopf "Bremse" aussteuert.

Das 1-Kanal-Druckregelmodul 1C-EPM der Vorderachse ist dann versorgungseitig an einen ersten (Vorderachs-) Druckluftvorrat C1 angeschlossen, der unter einem ersten Vorratsdruck steht. Das an der Hinterachse angeordnete 2-Kanal-Druckregelmodul ist versorgungsseitig an einen zweiten (Hinterachs-) Druckluftvorrat C2 angeschlossen, der unter einem zweiten Vorratsdruck steht. Das Anhängersteuermodul TCM wird versorgungsseitig beispielsweise von einem dritten Druckluftvorrat C3 druckluftversorgt.

In oben beschriebener Weise setzten dann die in den beiden Druckregelmodulen 1C-EPM und 2C-EPM sowie in dem Anhängersteuermodul TCM integrierten elektronischen Steuergeräte die in den empfangenen elektrischen Steuersignalen SS1, SS2 und SST enthaltenen Informationen über den jeweiligen Soll-Wert für den Betriebsbremsdruck um, indem sie für jeden Kanal die jeweils integrierten Magnetventile ansteuern, um pneumatische Steuerdrücke für die ebenfalls integrierten Relaisventile zu erzeugen, die dann bei dem 1-Kanal-Druckregelmodul 1C-EPM der Vorderachse an einem ersten pneumatischen Arbeitsausgang 10 einen Ist-Wert für den ersten Betriebsbremsdruck an der Vorderachse aussteuern. Der erste pneumatischen Arbeitsausgang 10 des 1-Kanal-Druckregelmoduls 1C-EPM ist mit zwei ABS-Drucksteuerventilen PCV verbunden, welche - ebenfalls von der EBS-ECU gesteuert - den ausgesteuerten zunächst gemeinsamen Betriebsbremsdruck seitenweise bremsschlupfregeln (ABS-Funktion) bevor er in die hier nicht gezeigten pneumatischen Betriebsbremszylinder BZ der Vorderachse eingesteuert wird.

In gleicher Weise wird von dem 2-Kanal-Druckregelmodul 2C-EPM an der Hinterachse je Kanal ein Ist-Wert eines zweiten Betriebsbremsdrucks an einen der beiden zweiten pneumatischen Arbeitsausgänge 11 gesteuert. Die beiden zweiten pneumatischen Arbeitsausgänge sind an jeweils einen pneumatischen Betriebsbremszylinder BZ der Hinterachse angeschlossen. Der je Kanal vorhandene integrierte Drucksensor meldet dann den Ist-Wert an das jeweilige integrierte elektronische Steuergerät, welches dann durch elektrische Ansteuerung der integrierten Magnetventile den Ist-Wert auf den Soll-Wert regelt. Das integrierte elektronische Steuergerät umfasst auch ABS-Routinen, um den Betriebsbremsdruck seitenweise hinsichtlich Bremsschlupf zu regeln.

Auf die gleiche Weise wird in dem Anhängersteuermodul TCM abhängig von dem elektrischen Anhängersteuersignal SST ein Anhängerbremsdruck an den Kupplungskopf "Bremse" ausgesteuert, durch den integrierten Drucksensor gemessen und dann auf den Soll-Wert für den Anhängerbremsdruck durch das integrierte elektronische Steuergerät geregelt.

Die EBS-ECU, der erste elektrische Kanal 3 des Fußbremsmoduls FBM, das Anhängersteuermodul TCM und die Druckregelmodule 1C-EPM, 2C-EPM werden hier von einer ersten elektrischen Energieversorgung I, beispielsweise einer an das Bordnetz angeschlossenen Batterie mit elektrischer Energie versorgt.

Die oben beschriebenen Funktionen betreffen die elektro-pneumatische Steuerung, bei welcher alle elektrischen und elektronischen Komponenten der beiden Betriebsbremskreise und des Anhängerbremskreises wie beispielsweise der erste elektrische Kanal 3 des Fußbremsmoduls FBM, die erste elektrische Energieversorgung I, die EBS-ECU und die in den Druckregelmoduln 1C-EPM, 2C-EPM und in dem Anhängersteuermodul TCM integrierten elektronischen Steuergeräte, Magnetventile und Drucksensoren intakt sind.

Für eine demgegenüber nachrangige pneumatische Steuerung der beiden Betriebsbremskreise steuert, wie oben beschrieben, der pneumatische Kanal 2 des Fußbremsmoduls FBM einen gemeinsamen pneumatischen Steuerdruck SD für den Vorderachsbremskreis und den Hinterachsbremskreis in eine pneumatische Leitung 12 aus, die sowohl an einen ersten pneumatischen Steuereingang 13 des 1-Kanal-Druckregelmoduls als auch einen zweiten pneumatischen Steuereingang 14 des 2-Kanal-Druckregelmoduls 2C-EPM an der Hinterachse angeschlossen ist. Weiterhin ist die pneumatische Leitung 12 auch ein einen dritten pneumatischen Steuereingang 15 des Anhängersteuermoduls TCM angeschlossen.

Da der pneumatische Kanal 2 des Fußbremsmoduls FBM ist mit einem Versorgungsanschluss 16 an einen dritten Druckluftvorrat C3 eines dritten Druckluftverbraucherkreises angeschlossen ist, wird der gemeinsame pneumatische Steuerdruck SD für das 1-Kanal-Druckregelmodul 1C-EPM, das 2-Kanal-Druckregelmodul 2C-EPM von einem in dem dritten Druckluftvorrat C3 herrschenden dritten Vorratsdruck abgeleitet.

Der erste, zweite und dritte Druckluftvorrat C1, C2 und C3 werden durch ein hier nicht gezeigtes Mehrkreisschutzventil mit einer von einem Kompressor geförderten Druckluft befüllt und sind kreisweise getrennt und daher unabhängig voneinander.

Wenn daher die vorrangige elektro-pneumatische Steuerung des elektronischen Betriebsbremssystems 1 ausfällt, beispielsweise dadurch, dass eine elektrische/elektronische Komponente oder mehrere elektrische/elektronische Komponenten ausfallen, wie die erste elektrische Energieversorgung I, der erste elektrische Kanal 3 des Fußbremsmoduls, die EBS-ECU und/oder die in den Druckregelmoduln 1C-EPM, 2C-EPM oder in dem Anhängersteuermodul TCM integrierten elektronischen Steuergeräte und/oder Magnetventile, so greift die nachrangige pneumatische Steuerung des Betriebsbremssystems 1 als pneumatische Redundanz.

Mit anderen Worten schalten in den Druckregelmoduln 1C-DRM, 2C-DRM und im Anhängersteuermodul TCM die dann stromlos gesetzten Backup-Magnetventile von der Sperrstellung, in welcher der gemeinsame pneumatische Steuerdruck SD von dem pneumatischen Steuereingang des betreffenden integrierten Relaisventils abgesperrt ist, federbelastet und unbestromt in ihre Durchgangsstellung um, wobei dann der gemeinsame pneumatische Steuerdruck SD das betreffende Relaisventil steuert, damit dieses dann aus dem jeweils angeschlossenen ersten, zweiten oder dritten Druckluftvorrat C1, C2 oder C3 den ersten und zweiten Betriebsbremsdruck sowie den Anhängerbremsdruck moduliert und an die betreffenden pneumatischen Betriebsbremszylinder BZ bzw. an den Kupplungskopf "Bremse" leitet.

Eine weitere pneumatische Redundanz für das Betriebsbremssystem 1 ergibt sich daraus, dass der Versorgungsanschluss 16 des pneumatischen Kanals 2 des Fußbremsmoduls FBM aus dem dritten Druckluftvorrat C3 druckluftversorgt wird, der unabhängig von dem ersten und zweiten Druckluftvorrat C1, C2 ist.

Falls daher zum einen bereits, wie oben beschrieben, die vorrangige elektro-pneumatische Steuerung des Betriebsbremssystems 1 ausgefallen ist und zusätzlich beispielsweise der erste Druckluftvorrat C1 und/oder der zweite Druckluftvorrat C2 bzw. eine von diesem Druckluftvorrat C1 oder C2 bzw. von diesen Druckluftvorräten C1, C2 zu den druckluftversorgten Komponenten FBM, 1C-EPM, 2C-EPM gezogene Versorgungsleitung ein Leck aufweist, dann wäre auch eine pneumatische Steuerung der von dem Versorgungsdruckluftverlust betroffenen Komponente nicht mehr möglich. Weil aber der pneumatische Kanal 2 des Fußbremsmoduls FBM aus dem dritten Druckluftvorrat C3 druckluftversorgt wird, wirkt sich ein solcher Druckluftverlust nicht auf die redundante pneumatische Steuerung aus. Insbesondere bleibt auch die Funktion der Anhängerbremsen durch eine Versorgung des Anhängersteuermoduls TCM durch den dritten Druckluftvorrat C3 von einem derartigen Druckluftverlust unbeeinflusst.

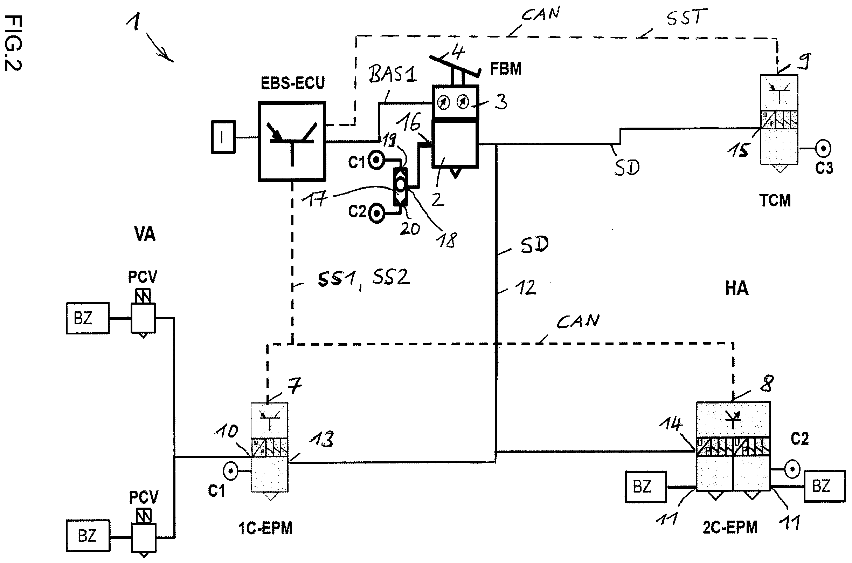

Bei den in den **Fig. 2** bis **Fig. 4** dargestellten weiteren Ausführungsbeispielen sind identische, gleichartige oder gleichwirkende Bauteile und Komponenten mit den gleichen Bezugszeichen bezeichnet wie in **Fig. 1****.**

Im Unterschied zu **Fig. 1** ist bei der Ausführungsform von **Fig. 2** der Versorgungsanschluss 16 und damit der pneumatische Kanal 2 des Fußbremsmoduls FBM an einen Ausgang 18 eines Wechselventils (Select-High-Ventil) 17 angeschlossen, dessen erster Eingang 19 an den ersten Druckluftvorrat C1 und dessen zweiter Eingang 20 an den zweiten Druckluftvorrat C2 angeschlossen ist. Das Wechselventil 17 schaltet den jeweils größeren Vorratsdruck an seinen beiden Eingängen, also entweder der ersten Vorratsdruck des ersten Druckluftvorrats C1 oder den zweiten Vorratsdruck des zweiten Druckluftvorrats C2 an seinen Ausgang 18 weiter und damit an den Versorgungsanschluss 16 und in den pneumatischen Kanal 2 des Fußbremsmoduls FBM.

Falls daher im Rahmen der redundanten pneumatischen Steuerung des Betriebsbremssystems 1 einer der beiden Druckluftvorräte C1 oder C2 oder eine an den betreffenden Druckluftvorrat C1 oder C2 angeschlossene Versorgungsleitung ein Leck aufweist, so leitet das Wechselventil 17 den dann von dem Leck nicht betroffenen Vorratsdruck aus dem ersten Druckluftvorrat C1 oder aus dem zweiten Druckluftvorrat C2 in den pneumatischen Kanal 2 des Fußbremsmoduls FBM, damit dort der gemeinsame pneumatische Steuerdruck erzeugt werden kann.

Die Ausführungsformen von **Fig. 1** und **Fig. 2** weisen daher pneumatische Steuersignalerzeugungsmittel zur Erzeugung des gemeinsamen pneumatischen Steuerdrucks SD auf, welche den (einzigen) pneumatischen Kanal 2 des Fußbremsmoduls FBM umfassen.

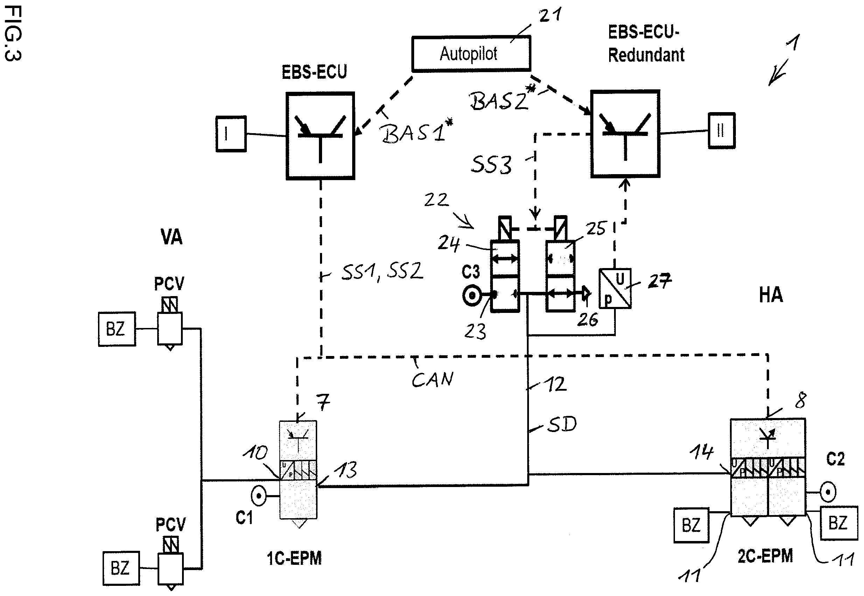

Während bei den Ausführungsformen von **Fig. 1** und **Fig. 2** die Fahrzeug-Sollverzögerung mittels einer Betätigung des Fußbremspedals 4 des Fußbremsmoduls FBM durch den Fahrer vorgegeben wird, ist dies bei der Ausführungsform von **Fig. 3** nicht mehr der Fall, weil dort kein Fußbremsmodul FBM vorhanden ist, wie es beispielsweise bei einem vollständig autonom gebremstem Fahrzeug in Level 5 der Fall sein kann. Dann wird die Fahrzeug-Sollverzögerung von einer Autopilotenrichtung vorgegeben.

Andererseits illustriert **Fig. 3** auch den Fall, in welchem zwar ein Fußbremsmodul wie in **Fig. 1** und **Fig. 2** vorhanden aber in **Fig. 3** nicht dargestellt ist, und die Fahrzeug-Sollverzögerung von einem Fahrerassistenzsystem wie beispielsweise einem Notbremsassistenten abhängig von Fahrbetriebsbedingungen wie beispielsweise dem Abstand oder der Relativgeschwindigkeit in Bezug zu einem vorausfahrenden Fahrzeug automatisch vorgegeben wird. Dann gibt eine elektronische Steuerung des Fahrerassistenzsystems die Fahrzeug-Sollverzögerung vor.

Im Falle der Autopiloteinrichtung steuert ein elektronisches Autopilot-Steuergerät 21 dann das erste elektrische Bremsanforderungssignal BAS1, welches die Fahrzeug-Sollverzögerung repräsentiert, an die erste Steuerelektronik EBS-ECU aus, welche dann wie oben zu **Fig. 1** beschrieben die elektrischen Steuersignale SS1, SS2, SST für die Druckregelmodule 1C-EPM, 2C-EPM und optional auch für das Anhängersteuermodul TCM erzeugt. Das elektronische Autopilot-Steuergerät 21 wird vorzugsweise von der ersten elektrischen Energieversorgung I und/oder von einer zweiten elektrischen Energieversorgung II mit elektrischer Energie versorgt, welche unabhängig von der ersten elektrischen Energieversorgung I ist.

Andererseits umfasst das elektronische Betriebsbremssystem 1 hier zusätzlich eine zweite Steuerelektronik EBS-ECU-Redundant, welche eine redundante Steuerelektronik des EBS, d.h. ein redundantes Bremssteuergerät darstellt. Von dem elektronischen Autopilot-Steuergerät 21 wird dann in die redundante EBS-ECU-Redundant ein zweites Bremsanforderungssignal BAS2* eingesteuert, welches wie das von ihm ausgesteuerte erste Bremsanforderungssignal BAS1* ebenfalls die Fahrzeug-Sollverzögerung repräsentiert, welche beispielsweise in Routinen des Autopilot-Steuergeräts 21 abhängig von Fahrbetriebsbedingungen erzeugt wird.

Auf der Basis des ersten Bremsanforderungssignals BAS1* werden wie dann wie bei den Ausführungsformen von **Fig. 1** und **Fig. 2** von der ersten Steuerelektronik EBS-ECU die ersten und zweiten elektrischen Steuersignale SS1 und SS2 sowie gegebenenfalls auch das elektrische Anhängersteuersignal SST erzeugt, soweit ein Anhängersteuermodul TCM vorhanden ist.

Der Funktionsumfang der redundanten zweiten Steuerelektronik EBS-ECU-Redundant kann dann beispielsweise genauso groß sein wie der Funktionsumfang der ersten Steuerelektronik EBS-ECU oder auch geringer. Die zweite Steuerelektronik EBS-ECU-Redundant steuert dann abhängig von dem zweiten elektrischen Bremsanforderungssignal BAS2* ein drittes elektrisches Steuersignal SS3 in eine Magnetventileinrichtung 22 ein, die hier beispielsweise mit ihrem Versorgungsanschluss 23 an den dritten Druckluftvorrat C3 angeschlossen ist.

Alternativ könnte der Versorgungsanschluss 23 auch an den Ausgang 18 eines Wechselventils wie in **Fig. 2** angeschlossen sein, welches dann über seinen ersten Eingang an den ersten Druckluftvorrat C1 und mit seinem zweiten Eingang 20 an den zweiten Druckluftvorrat angeschlossen ist, um den jeweils größeren Vorratsdruck zwischen dem ersten Vorratsdruck und dem zweiten Vorratsdruck an den Ausgang 18 zu schalten.

Das dritte elektrische Steuersignal SS3 repräsentiert einen Soll-Wert für den gemeinsamen pneumatischen Steuerdruck SD, wie er durch die pneumatische Leitung 12 in die ersten und zweiten pneumatischen Steuereingänge 13, 14 der Druckregelmodule 1C-EPM und 2C-EPM eingesteuert wird. Optional kann auch bei der Ausführungsform von **Fig. 3** ein Anhängersteuermodul TCM wie in **Fig. 1** und **Fig. 2** vorgesehen und mit seinem dritten pneumatischen Steuereingang 15 an die pneumatische Leitung 12 angeschlossen sein, welches dann ebenfalls von dem gemeinsamen pneumatischen Steuerdruck SD gesteuert wird.

Die Magnetventileinrichtung 22 beinhaltet ein Einlassventil 24 und ein Auslassventil 25, die jeweils beispielsweise als 2/2-Wege-Magnetventile mit einer Durchlassstellung und einer Sperrstellung ausgeführt sind. Wie in **Fig. 3** zu sehen, ist das Einlassventil 24 eingangsseitig an den Versorgungsanschluss 23 und ausgangsseitig an die pneumatische Leitung 12 angeschlossen, die zu den pneumatischen Steuereingängen 13, 14 und 15 der Druckregelmodule 1C-EPM, 2C-EPM und des Anhängersteuermoduls TCM führt und diese Komponenten dann pneumatisch steuert. Andererseits steht das Auslassventil 25 eingangsseitig ebenfalls mit der pneumatischen Leitung 12 in Verbindung und ausgangsseitig mit einer Drucksenke 26.

Für eine Belüftung der pneumatischen Leitung 12 zum pneumatisch redundanten Zuspannen der Betriebsbremszylinder BZ wird daher das Einlassventil 24 von der zweiten elektronischen Steuerung EBS-ECU-Redundant in seine Durchgangsstellung geschaltet, damit Druckluft als gemeinsamer pneumatischer Steuerdruck SD aus dem dritten Druckluftvorrat C3 in die pneumatische Leitung 12 gelangen kann. In diesem Fall wird das Auslassventil 25 in seine Sperrstellung gesteuert.

Für eine Entlüftung der pneumatischen Leitung zum pneumatisch redundanten Lösen der Betriebsbremszylinder BZ wird hingegen das Auslassventil 25 in seine Durchgangsstellung geschaltet, damit Druckluft aus der pneumatischen Leitung an die Drucksenke 26 gelangen kann, um den gemeinsamen pneumatischen Steuerdruck zu senken. In diesem Fall wird das Einlassventil 24 in seine Sperrstellung gesteuert, damit keine Druckluft aus dem dritten Druckluftvorrat C3 entweichen kann.

Das Einlassventil 24 und das Auslassventil 25 können von der zweiten Steuerelektronik EBS-ECU-Redundant auch durch Pulsweitenmodulation getaktet von der Sperrstellung in die Durchlassstellung und umgekehrt geschaltet werden, um die Größe des gemeinsamen pneumatischen Steuerdruck SD in kurzen Zeitabständen anpassen zu können.

Für eine Regelung des gemeinsamen pneumatischen Steuerdrucks SD kann ein Drucksensor 27 vorgesehen werden, welcher einen Ist-Wert für den gemeinsamen pneumatischen Steuerdruck in die zweite elektronische Steuerung EBS-ECU-Redundant einsteuert, welche daraufhin den Ist-Wert auf den durch das dritte elektrische Steuersignal SS3 vorgegebenen Soll-Wert des gemeinsamen pneumatischen Steuerdrucks SD einregelt.

Bei der Ausführungsform von **Fig. 3** sind daher die Steuersignalerzeugungsmittel zur Erzeugung des gemeinsamen pneumatischen Steuerdrucks SD elektro-pneumatisch ausgebildet und beinhalten die zweite elektronische Steuerung EBS-ECU-Redundant, die Magnetventileinrichtung 22 und den Drucksensor 27 sowie optional auch die implementierte Regelung des gemeinsamen pneumatischen Steuerdrucks SD. Alternativ können auch der Drucksensor 27 und die Regelung entfallen und durch eine einfache Steuerung des gemeinsamen pneumatischen Steuerdrucks SD ersetzt werden.

Durch die Kombination aus zweiter elektronischer Steuerung EBS-ECU-Redundant und Magnetventileinrichtung 22 als Bestandteile der dann elektro-pneumatischen Steuersignalerzeugungsmittel wird eine elektro-pneumatische Redundanz zur Verfügung gestellt, wenn die elektro-pneumatische Steuerung des Betriebsbremssystems 1 durch die erste elektronische Steuerung EBS-ECU ausgefallen ist und dann die elektro-pneumatische Steuerung des Betriebsbremssystems 1 durch die zweite elektronische Steuerung EBS-ECU-Redundant und die Magnetventileinrichtung 22 erfolgt.

Zusätzlich wird eine weitere, dann pneumatische Redundanz durch den dritten Druckluftvorrat C3 des dritten Druckluftverbraucherkreises am Versorgungsanschluss 23 der Magnetventileinrichtung 22 zur Verfügung gestellt, wenn eine Versorgung durch den ersten Druckluftvorrat C1 und/oder den zweiten Druckluftvorrat C2 ausfällt. Dann ist eine von der jeweiligen Fahrzeug-Verzögerung abhängige Erzeugung des gemeinsamen pneumatischen Steuerdrucks SD auf der Basis des dritten Vorratsdrucks in dem dritten Druckluftvorrat C3 gewährleistet.

Vorzugsweise wird die zweite elektronische Steuerung EBS-ECU-Redundant von einer von der ersten elektrischen Energieversorgung I unabhängigen zweiten elektrischen Energieversorgung II mit elektrischer Energie versorgt, so dass auch ein Ausfall der ersten elektrischen Energieversorgung I keine Auswirkungen auf die Abbremsbarkeit des Nutzfahrzeugs hat.

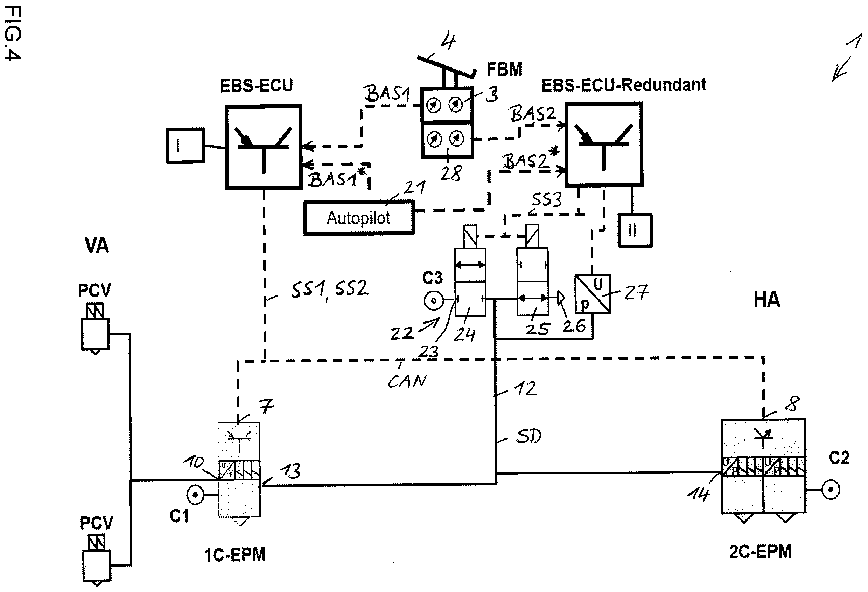

Bei der Ausführungsform von **Fig. 4** wird die Fahrzeug-Sollverzögerung abhängig von einer Betätigung des Fußbremspedals 4 des Fußbremsmoduls FBM und/oder von der elektronischen Autopilot-Steuergerät 21 vorgegeben, je nachdem, welcher jeweilige Wert für die Fahrzeug-Verzögerung größer ist. Mit anderen Worten schließt die Ausführungsform von **Fig. 4** den Fall ein, dass lediglich der Fahrer über eine Betätigung des Fußbremspedals die Fahrzeug-Sollverzögerung vorgibt, ohne dass das elektronischen Autopilot-Steuergerät 21 eine Fahrzeug-Sollverzögerung vorgibt, weil beispielsweise die Autopilot-Einrichtung nicht aktiviert ist, Weiterhin kann auch lediglich das elektronische Autopilot-Steuergerät 21 die Fahrzeug-Sollverzögerung vorgeben, beispielsweise, wenn sich das Nutzfahrzeug vollständig autonom gesteuert wird und der Fahrer nicht eingreift. Möglich ist aber auch, dass sowohl der Fahrer über eine Betätigung des Fußbremspedals als auch das elektronische Autopilot-Steuergerät 21 jeweils einen absoluten Wert für die Fahrzeug-Sollverzögerung vorgeben, wobei dann insbesondere der jeweils größere absolute Wert für die Fahrzeug-Sollverzögerung weiterverarbeitet wird.

Bei dem hier verwendeten Fußbremsmodul FBM ist neben einem ersten elektrischen Kanal 3, welcher wie in **Fig. 1** und **Fig. 2** das erste elektrische Bremsanforderungssignal BAS1 für die erste elektronische Steuerung EBS-ECU erzeugt, ein zweiter elektrischer Kanal 28 vorhanden, welcher hier ein zweites elektrische Bremsanforderungssignal BAS2 für die zweite elektronische Steuerung EBS-ECU-Redundant erzeugt.

Dann können von dem ersten elektrischen Kanal des Fußbremsmoduls FBM und/oder von dem elektronischen Autopilot-Steuergerät 21 ein erstes Bremsanforderungssignal BAS1 bzw. BAS1* erzeugt und in die erste Steuerelektronik EBS-ECU eingesteuert werden. Auch können von dem zweiten elektrischen Kanal des Fußbremsmoduls FBM und/oder von dem elektronischen Autopilot-Steuergerät 21 ein zweites Bremsanforderungssignal BAS2 bzw. BAS2* erzeugt werden. Für eine weitere Verarbeitung von unter Umständen parallel erzeugten Bremsanforderungssignale BAS1 bzw. BAS1* und BAS2 bzw. BAS2* ist dann insbesondere entscheidend, welches von den Bremsanforderungssignale BAS1 und BAS1* bzw. BAS2 und BAS2* eine größere Fahrzeug-Sollverzögerung repräsentiert.

In der ersten elektronischen Steuerung EBS-ECU wird dann abhängig von dem jeweils herangezogenen ersten elektrischen Bremsanforderungssignal BAS1 bzw. BAS1 das erste und zweite elektrische Steuersignal SS1, SS2 für die beiden Steuerventile 1C-EPM und 2C-EPM erzeugt. Ebenso wird in der zweiten elektronischen Steuerung EBS-ECU-Redundant abhängig von dem jeweils herangezogenen zweiten elektrischen Bremsanforderungssignal BAS2 bzw. BAS2* das dritte elektrische Steuersignal SS3 für die Magnetventileinrichtung 22 erzeugt. Die Ausführungsform von **Fig. 4** beinhaltet daher dieselben elektro-pneumatischen Steuersignalerzeugungsmittel wie **Fig. 3****,** welche dann aber das zweite elektrische Bremsanforderungssignal BAS2 nicht von dem Autopilot-Steuergerät 21 sondern von dem zweiten elektrischen Kanal 28 des Fußbremsmoduls FBM erhalten.

Der Versorgungsanschluss 23 der Magnetventileinrichtung 22 bzw. der elektro-pneumatischen Steuersignalerzeugungsmittel ist hier wiederum an den dritten Druckluftvorrat C3 angeschlossen, so dass auch hier die weitere pneumatische Redundanz gegeben ist, wenn eine Versorgung durch den ersten Druckluftvorrat C1 und/oder durch den zweiten Druckluftvorrat C2 ausfällt.

Daneben werden die erste elektronische Steuerung EBS-ECU und auch der erste elektrische Kanal 3 des Fußbremsmoduls FBM von der ersten elektrischen Energieversorgung I und die zweite elektronische Steuerung EBS-ECU-Redundant und auch der zweite elektrische Kanal 28 des Fußbremsmoduls FBM von der zweiten elektrischen Energieversorgung II mit elektrischer Energie versorgt, um eine elektrische Versorgungs-Redundanz zur Verfügung zu stellen.

Als elektro-pneumatisch steuerbare Steuerventile sind hier lediglich beispielsweise Druckregelmodule 1C-EPM, 2C-EPM und ein Anhängersteuermodul TCM angegeben. Es ist aber klar, dass jegliches elektro-pneumatisches Steuerventil wie beispielsweise elektrisch und pneumatisch steuerbare Relaisventile oder Proportionalventile als Steuerventile zum Einsatz kommen können.

Es versteht sich, dass bei den Ausführungsformen von **Fig. 3** und **Fig. 4** ebenfalls ein elektrisch und pneumatisch gesteuertes Anhängersteuermodul TCM wie den Ausführungsformen von **Fig. 1** und **Fig. 2** vorhanden sein kann.

### Bezugszeichenliste

- 1: Betriebsbremssystem
- 2: pneumatischer Kanal
- 3: 1. elektrischer Kanal
- 4: Fußbremspedal
- 5: Signalleitung
- 6: 1. elektrischer Eingang
- 7: 1. elektrischer Steuereingang
- 8: 2. elektrischer Steuereingang
- 9: 3. elektrischer Steuereingang
- 10: 1. pneumatischer Arbeitsausgang
- 11: 2. pneumatische Arbeitsausgänge
- 12: pneumatische Leitung
- 13: 1. pneumatischer Steuereingang
- 14: 2. pneumatischer Steuereingang
- 15: 3. pneumatischer Steuereingang
- 16: Versorgungsanschluss
- 17: Wechselventil
- 18: Ausgang
- 19: 1. Eingang
- 20: 2. Eingang
- 21: Autopilot-Steuergerät
- 22: Magnetventileinrichtung
- 23: Versorgungsanschluss
- 24: Einlassventil
- 25: Auslassventil
- 26: Drucksenke
- 27: Drucksensor
- 28: 2. elektrischer Kanal
- C1: erster Druckluftvorrat
- C2: zweiter Druckluftvorrat
- C2: dritter Druckluftvorrat
- EBS-ECU: erste elektronische Steuerung
- EBS-ECU-Redundant: zweite elektronische Steuerung
- BAS1, BAS1*: erstes elektrisches Bremsanforderungssignal
- BAS2, BAS2*: zweites elektrisches Bremsanforderungssignal
- SS1, SS2, SST: 1., 2. elektrisches Steuersignal, Anhänger-Steuersignal
- SS3: drittes elektrisches Steuersignal
- 1C-EPM: erstes Steuerventil (1-Kanal-Druckregelmodul)
- 2C-EPM: zweites Steuerventil (2-Kanal-Druckregelmodul)
- PCV: ABS-Drucksteuerventile
- TCM: Anhängersteuermodul
- FBM: Fußbremsmodul
- EBS: elektronisch geregeltes Betriebsbremssystem
- CAN: Bremsen-CAN
- I: erste elektrische Energieversorgung
- II: zweite elektrische Energieversorgung
- SD: gemeinsamer pneumatischer Steuerdruck

## Patentansprüche

1. Elektronisch gesteuertes pneumatisches Betriebsbremssystem (1), welches wenigstens Folgendes aufweist:
a) Eine erste elektronische Steuerung (EBS-ECU),
b) einen ersten Bremskreis mit einem ersten Druckluftvorrat (C1) und mit einem ersten Steuerventil (1C-EPM),
c) einen zweiten Bremskreis mit einem zweiten, von dem ersten Druckluftvorrat (C1) unabhängigen Druckluftvorrat (C2) und mit einem zweiten Steuerventil (2C-EPM), wobei der erste Bremskreis von dem ersten Druckluftvorrat (C1) und der zweite Bremskreis von dem zweiten Druckluftvorrat (C2) druckluftversorgt ist, wobei
d) in dem ersten Bremskreis auf der Basis von Druckluft aus dem ersten Druckluftvorrat (C1) durch das erste Steuerventil (1C-EPM) wenigstens ein erster Bremsdruck an wenigstens einem ersten pneumatischen Arbeitsausgang (10) des ersten Steuerventils (1C-EPM) einstellbar ist und in dem zweiten Bremskreis auf der Basis von Druckluft aus dem zweiten Druckluftvorrat (C2) durch das zweite Steuerventil (2C-EPM) wenigstens ein zweiter Bremsdruck an wenigstens einem zweiten pneumatischen Arbeitsausgang (11) des zweiten Steuerventils (2C-EPM) einstellbar ist, wobei an dem ersten pneumatischen Arbeitsausgang (10) wenigstens ein pneumatischer Betriebsbremsaktuator des ersten Bremskreises und an dem zweiten pneumatischen Arbeitsausgang (11) wenigstens ein pneumatischer Betriebsbremsaktuator des zweiten Bremskreises angeschlossen ist, und wobei
e) das erste Steuerventil (1C-EPM) einen ersten elektrischen Steuereingang (7) zum Aufnehmen eines ersten elektrischen Steuersignals (SS1) und einen ersten pneumatischen Steuereingang (13) zum Aufnehmen eines ersten pneumatischen Steuerdrucks (SD) und das zweite Steuerventil (2C-EPM) einen zweiten elektrischen Steuereingang (8) zum Aufnehmen eines zweiten elektrischen Steuersignals (SS2) und einen zweiten pneumatischen Steuereingang (14) zum Aufnehmen eines zweiten pneumatischen Steuerdrucks (SD) aufweist, und wobei
f) die erste elektronische Steuerung (EBS-ECU) abhängig von einer Fahrzeug-Sollverzögerung das erste elektrische Steuersignal (SS1) erzeugt und in den ersten elektrischen Steuereingang (7) des ersten Steuerventils (1C-EPM) einsteuert und das zweite elektrische Steuersignal (SS2) erzeugt und in den zweiten elektrischen Steuereingang (8) des zweiten Steuerventils (2C-EPM) einsteuert, und wobei
g) Steuersignalerzeugungsmittel vorgesehen sind, welche abhängig von der Fahrzeug-Sollverzögerung den ersten pneumatischen Steuerdruck (SD) erzeugen und in den ersten pneumatischen Steuereingang (13) des ersten Steuerventils (1C-EPM) einsteuern und den zweiten pneumatischen Steuerdruck (SD) erzeugen und in den zweiten pneumatischen Steuereingang (14) des zweiten Steuerventils (2C-EPM) einsteuern, **dadurch gekennzeichnet, dass**
h) wenigstens ein von dem ersten Bremskreis und dem zweiten Bremskreis unabhängiger dritter Druckluftverbraucherkreis vorgesehen ist, welcher von wenigstens einem dritten Druckluftvorrat (C3) druckluftversorgt ist, der unabhängig von dem ersten Druckluftvorrat (C1) und dem zweiten Druckluftvorrat (C2) ist, wobei
i) ein pneumatischer Versorgungsanschluss (23) der Steuersignalerzeugungsmittel von einem dritten Vorratsdruck des dritten Druckluftvorrats (C3) druckluftversorgt ist, und dass
j) die Steuersignalerzeugungsmittel ausgebildet sind, dass sie auf der Basis des an dem Versorgungsanschluss (16; 23) anstehenden dritten Vorratsdrucks den ersten pneumatischen Steuerdruck (SD) erzeugen und in den ersten pneumatischen Steuereingang (13) einsteuern sowie den zweiten pneumatischen Steuerdruck (SD) erzeugen und in den zweiten pneumatischen Steuereingang (14) einsteuern.

2. Elektronisch gesteuertes pneumatisches Betriebsbremssystem (1), welches wenigstens Folgendes aufweist:
a) Eine erste elektronische Steuerung (EBS-ECU),
b) einen ersten Bremskreis mit einem ersten Druckluftvorrat (C1) und mit einem ersten Steuerventil (1C-EPM),
c) einen zweiten Bremskreis mit einem zweiten, von dem ersten Druckluftvorrat (C1) unabhängigen Druckluftvorrat (C2) und mit einem zweiten Steuerventil (2C-EPM), wobei der erste Bremskreis von dem ersten Druckluftvorrat (C1) und der zweite Bremskreis von dem zweiten Druckluftvorrat (C2) druckluftversorgt ist, wobei
d) in dem ersten Bremskreis auf der Basis von Druckluft aus dem ersten Druckluftvorrat (C1) durch das erste Steuerventil (1C-EPM) wenigstens ein erster Bremsdruck an wenigstens einem ersten pneumatischen Arbeitsausgang (10) des ersten Steuerventils (1C-EPM) einstellbar ist und in dem zweiten Bremskreis auf der Basis von Druckluft aus dem zweiten Druckluftvorrat (C2) durch das zweite Steuerventil (2C-EPM) wenigstens ein zweiter Bremsdruck an wenigstens einem zweiten pneumatischen Arbeitsausgang (11) des zweiten Steuerventils (2C-EPM) einstellbar ist, wobei an dem ersten pneumatischen Arbeitsausgang (10) wenigstens ein pneumatischer Betriebsbremsaktuator des ersten Bremskreises und an dem zweiten pneumatischen Arbeitsausgang (11) wenigstens ein pneumatischer Betriebsbremsaktuator des zweiten Bremskreises angeschlossen ist, und wobei
e) das erste Steuerventil (1C-EPM) einen ersten elektrischen Steuereingang (7) zum Aufnehmen eines ersten elektrischen Steuersignals (SS1) und einen ersten pneumatischen Steuereingang (13) zum Aufnehmen eines ersten pneumatischen Steuerdrucks (SD) und das zweite Steuerventil (2C-EPM) einen zweiten elektrischen Steuereingang (8) zum Aufnehmen eines zweiten elektrischen Steuersignals (SS2) und einen zweiten pneumatischen Steuereingang (14) zum Aufnehmen eines zweiten pneumatischen Steuerdrucks (SD) aufweist, und wobei
f) die erste elektronische Steuerung (EBS-ECU) abhängig von einer Fahrzeug-Sollverzögerung das erste elektrische Steuersignal (SS1) erzeugt und in den ersten elektrischen Steuereingang (7) des ersten Steuerventils (1C-EPM) einsteuert und das zweite elektrische Steuersignal (SS2) erzeugt und in den zweiten elektrischen Steuereingang (8) des zweiten Steuerventils (2C-EPM) einsteuert, und wobei
g) Steuersignalerzeugungsmittel vorgesehen sind, welche abhängig von der Fahrzeug-Sollverzögerung den ersten pneumatischen Steuerdruck (SD) erzeugen und in den ersten pneumatischen Steuereingang (13) des ersten Steuerventils (1C-EPM) einsteuern und den zweiten pneumatischen Steuerdruck (SD) erzeugen und in den zweiten pneumatischen Steuereingang (14) des zweiten Steuerventils (2C-EPM) einsteuern, **dadurch gekennzeichnet, dass**
h) wenigstens ein von dem ersten Bremskreis und dem zweiten Bremskreis unabhängiger dritter Druckluftverbraucherkreis vorgesehen ist, welcher von wenigstens einem dritten Druckluftvorrat (C3) druckluftversorgt ist, der unabhängig von dem ersten Druckluftvorrat (C1) und dem zweiten Druckluftvorrat (C2) ist, wobei
i) ein pneumatischer Versorgungsanschluss (23) der Steuersignalerzeugungsmittel von dem jeweils größeren Vorratsdruck zwischen einem ersten Vorratsdruck in dem ersten Druckluftvorrat (C1) und einem zweiten Vorratsdruck in dem zweiten Druckluftvorrat (C2) druckluftversorgt ist, und dass
j) die Steuersignalerzeugungsmittel ausgebildet sind, dass sie auf der Basis des an dem Versorgungsanschluss (16; 23) anstehenden ersten oder zweiten Vorratsdrucks den ersten pneumatischen Steuerdruck (SD) erzeugen und in den ersten pneumatischen Steuereingang (13) einsteuern sowie den zweiten pneumatischen Steuerdruck (SD) erzeugen und in den zweiten pneumatischen Steuereingang (14) einsteuern.

3. Elektronisch gesteuertes pneumatisches Betriebsbremssystem nach Anspruch 1 oder 2, **dadurch gekennzeichnet, dass** die Fahrzeug-Sollverzögerung durch eine Betätigung eines Fußbremspedals (4) eines Fußbremsmoduls (FBM) und/oder von einer Autopiloteinrichtung (21) und/oder von einem Fahrerassistenzsystem vorgegeben wird.

4. Elektronisch gesteuertes pneumatisches Betriebsbremssystem nach Anspruch 2, **dadurch gekennzeichnet, dass** Auswahlmittel (17) vorgesehen sind, welche den jeweils größeren Druck zwischen dem ersten Vorratsdruck und dem zweiten Vorratsdruck an den Versorgungsanschluss (16; 23) der Steuersignalerzeugungsmittel steuern.

5. Elektronisch gesteuertes pneumatisches Betriebsbremssystem nach Anspruch 4, **dadurch gekennzeichnet, dass** die Auswahlmittel (17) ein pneumatisches Wechselventil umfassen, von welchem ein erster Eingang (19) an den ersten Druckluftvorrat (C1) und ein zweiter Eingang (20) an den zweiten Druckluftvorrat (C2) und ein Ausgang (18) an den Versorgungsanschluss (16; 23) der Steuersignalerzeugungsmittel angeschlossen ist.

6. Elektronisch gesteuertes pneumatisches Betriebsbremssystem nach einem der Ansprüche 3 bis 5, **dadurch gekennzeichnet, dass** das Fußbremsmodul (FBM) einen ersten elektrischen Kanal (3) umfasst, in dem abhängig von der Betätigung des Fußbremspedals (4) ein erstes elektrisches Bremsanforderungssignal (BAS1) erzeugt und in die erste elektronische Steuerung (EBS-ECU) einsteuert wird, welche abhängig von dem ersten Bremsanforderungssignal (BAS1) das erste elektrische Steuersignal (SS1) erzeugt und in den ersten elektrischen Steuereingang (7) einsteuert und das zweite elektrische Steuersignal (SS2) erzeugt und in den zweiten elektrischen Steuereingang (8) einsteuert.

7. Elektronisch gesteuertes pneumatisches Betriebsbremssystem nach Anspruch 6, **dadurch gekennzeichnet, dass** das Fußbremsmodul (FBM) wenigstens einen pneumatischen Kanal (2), insbesondere lediglich einen einzigen pneumatischen Kanal (2) umfasst, der von den Steuersignalerzeugungsmitteln umfasst und durch den Versorgungsanschluss (16) druckluftversorgt ist und abhängig von der Betätigung des Fußbremspedals (4) den ersten pneumatischen Steuerdruck (SD) erzeugt und in den ersten pneumatischen Steuereingang (13) einsteuert und den zweiten pneumatischen Steuerdruck (SD) erzeugt und in den zweiten pneumatischen Steuereingang (14) einsteuert.

8. Elektronisch gesteuertes pneumatisches Betriebsbremssystem nach Anspruch 6 oder 7, **dadurch gekennzeichnet, dass** das Fußbremsmodul (FBM) einen zweiten elektrischen Kanal (28) umfasst, in welchem abhängig von der Betätigung des Fußbremspedals (4) ein zweites elektrisches Bremsanforderungssignal (BAS2) erzeugt wird.

9. Elektronisch gesteuertes pneumatisches Betriebsbremssystem nach einem der Ansprüche 3 bis 8, **dadurch gekennzeichnet, dass** die Autopiloteinrichtung (21) und/oder das Fahrerassistenzsystem abhängig von der Fahrzeug-Sollverzögerung ein erstes elektrisches Bremsanforderungssignal (BAS1*) erzeugt und in die erste elektronische Steuerung (EBS-ECU) einsteuert, welche abhängig von dem ersten Bremsanforderungssignal (BAS1*) das erste elektrische Steuersignal (SS1) erzeugt und in den ersten elektrischen Steuereingang (7) einsteuert und das zweite elektrische Steuersignal (SS2) erzeugt und in den zweiten elektrischen Steuereingang (8) einsteuert, sowie ein zweites elektrisches Bremsanforderungssignal (BAS2*) erzeugt.

10. Elektronisch gesteuertes pneumatisches Betriebsbremssystem nach Anspruch 8 oder 9, **dadurch gekennzeichnet, dass** die Steuersignalerzeugungsmittel eine Magnetventileinrichtung (22) sowie eine zweite elektronische Steuerung (EBS-ECU-Redundant) umfassen, welche abhängig von dem oder einem zweiten elektrischen Bremsanforderungssignal (BAS2, BAS2*) ein drittes elektrisches Steuersignal (SS3) erzeugt und in die Magnetventileinrichtung (22) einsteuert, welche dann abhängig von dem dritten elektrischen Steuersignal (SS3) den ersten pneumatischen Steuerdruck (SD) erzeugt und in den ersten pneumatischen Steuereingang (13) einsteuert und den zweiten pneumatischen Steuerdruck (SD) erzeugt und in den zweiten pneumatischen Steuereingang (14) einsteuert.

11. Elektronisch gesteuertes pneumatisches Betriebsbremssystem nach Anspruch 10, **dadurch gekennzeichnet, dass** die erste elektronischen Steuerung (EBS-ECU) von einer ersten elektrischen Energieversorgung (I) mit elektrischer Energie versorgt wird, welche unabhängig von einer zweiten elektrischen Energieversorgung (II) ist, durch welche die zweite elektronische Steuerung (EBS-ECU-Redundant) mit elektrischer Energie versorgt wird.

12. Elektronisch gesteuertes pneumatisches Betriebsbremssystem nach Anspruch 10 oder 11, **dadurch gekennzeichnet, dass** die zweite elektronische Steuerung (EBS-ECU-Redundant) eine Redundanz für die erste elektronische Steuerung (EBS-ECU) ausbildet, wenn die erste elektronische Steuerung (EBS-ECU) oder eine erste elektrische Energieversorgung (I) der ersten elektronischen Steuerung (EBS-ECU) einen Fehler aufweist oder ausgefallen ist und dann der wenigstens eine erste Bremsdruck auf der Basis des ersten pneumatischen Steuerdrucks (SD) und der wenigstens eine zweite Bremsdruck auf der Basis des zweiten pneumatischen Steuerdrucks (SD) erzeugt werden.

13. Elektronisch gesteuertes pneumatisches Betriebsbremssystem nach einem der Ansprüche 10 bis 12, **dadurch gekennzeichnet, dass** die Magnetventileinrichtung (22) von dem Versorgungsanschluss (23) druckluftversorgt ist und eine Einlass/- Auslass-Magnetventilkombination zum vom dritten elektrischen Steuersignal (SS3) abhängigen Erhöhen, Halten und Senken des ersten pneumatischen Steuerdrucks (SD) und des zweiten pneumatischen Steuerdrucks (SD) umfasst.

14. Elektronisch gesteuertes pneumatisches Betriebsbremssystem einem der Ansprüche 10 bis 13, **dadurch gekennzeichnet, dass** die Steuersignalerzeugungsmittel wenigstens einen Drucksensor (27) umfassen, welcher einen dem von der Magnetventileinrichtung (22) ausgesteuerten ersten pneumatischen Steuerdruck (SD) und/oder zweiten pneumatischen Steuerdruck (SD) entsprechenden Ist-Druckwert an die zweite elektronische Steuerung (EBS-ECU-Redundant) meldet, welche in einem geschlossenen Regelkreis die Magnetventileinrichtung (22) steuert, um den Ist-Druckwert auf einen Soll-Druckwert zu regeln, welcher abhängig von dem zweiten elektrischen Bremsanforderungssignal (BAS2) ist.

15. Elektronisch gesteuertes pneumatisches Betriebsbremssystem nach einem der vorhergehenden Ansprüche, **dadurch gekennzeichnet, dass** die Steuersignalerzeugungsmittel ausgebildet sind, dass sie den ersten pneumatischen Steuerdruck (SD) und/oder den zweiten pneumatischen Steuerdruck (SD) in einen dritten pneumatischen Steuereingang (15) eines elektro-pneumatischen Anhängersteuermoduls (TCM) zur Steuerung der Bremsen eines Anhängers einsteuern, wobei das Anhängersteuermodul (TCM) durch ein drittes elektrisches Steuersignal (SST) der ersten elektronischen Steuerung (EBS-ECU) elektrisch gesteuert ist, wobei das dritte elektrische Steuersignal (SST) einen Soll-Wert für einen Anhängerbremsdruck repräsentiert.

16. Elektronisch gesteuertes pneumatisches Betriebsbremssystem nach einem der vorhergehenden Ansprüche, **dadurch gekennzeichnet, dass** das erste elektrische Steuersignal (SS1) einen ersten Soll-Wert für den ersten Bremsdruck und das zweite elektrische Steuersignal (SS2) einen zweiten Soll-Wert für den zweiten Bremsdruck repräsentiert.

17. Elektronisch gesteuertes pneumatisches Betriebsbremssystem nach einem der vorhergehenden Ansprüche, **dadurch gekennzeichnet, dass** das erste Steuerventil (1C-EPM) und/oder das zweite Steuerventil (2C-EPM) wenigstens durch Folgendes gebildet wird oder wenigstens Folgendes beinhaltet: Ein 1-Kanal-Druckregelmodul (1C-EPM) oder ein 2-Kanal-Druckregelmodul (2C-EPM) mit je Kanal: einem Relaisventil, einer Einlass-/Auslass-Magnetventilkombination, welche das Relaisventil pneumatisch vorsteuert, einem an den ersten elektrischen Steuereingang (7) oder an den zweiten elektrischen Steuereingang (8) angeschlossenen elektronischen Steuergerät, welches abhängig von dem ersten elektrischen Steuersignal (SS1) oder von dem zweiten elektrischen Steuersignal (SS2) die Einlass-/Auslassventil-Magnetkombination elektrisch ansteuert, um einen pneumatischen Vorsteuerdruck für das Relaisventil zu erzeugen, welches abhängig von dem pneumatischen Vorsteuerdruck einen Ist-Wert für den ersten Bremsdruck oder den zweiten Bremsdruck erzeugt, und mit wenigstens einem Drucksensor, welcher den Ist-Wert an das wenigstens eine elektronische Steuergerät meldet, damit dieses die Einlass-/Auslassventil-Magnetkombination elektrisch ansteuert, um den Ist-Wert an den Soll-Wert anzugleichen, sowie mit einem von dem elektronischen Steuergerät elektrisch gesteuertes Backup-Magnetventil, welches unbestromt eine Verbindung zwischen dem ersten pneumatischen Steuereingang (13) und dem ersten pneumatischen Arbeitsausgang (10) oder zwischen dem zweiten pneumatischen Steuereingang (14) und dem zweiten pneumatischen Arbeitsausgang (11) schafft und bestromt eine solche Verbindung sperrt.

18. Elektronisch gesteuertes pneumatisches Betriebsbremssystem nach einem der vorhergehenden Ansprüche, **dadurch gekennzeichnet, dass** der erste Bremskreis ein Vorderachsbremskreis und der zweite Bremskreis ein Hinterachsbremskreis ist.

19. Elektronisch gesteuertes pneumatisches Betriebsbremssystem nach einem der vorhergehenden Ansprüche, **dadurch gekennzeichnet, dass** der wenigstens eine erste Arbeitsausgang (10) des ersten Steuerventils (1C-EPM) mit wenigstens einem ersten pneumatischen Betriebsbremszylinder (BZ) und der wenigstens eine zweite Arbeitsausgang (11) des zweiten Steuerventils (2C-EPM) mit wenigstens einem zweiten pneumatischen Betriebsbremszylinder (BZ) verbunden ist.

20. Elektronisch gesteuertes pneumatisches Betriebsbremssystem nach Anspruch 1, **dadurch gekennzeichnet, dass** der dritte Druckluftverbraucherkreis ein Nebenverbraucherkreis oder ein Anhängerbremskreis ist.

21. Elektronisch gesteuertes pneumatisches Betriebsbremssystem nach einem der vorhergehenden Ansprüche, **dadurch gekennzeichnet, dass** die Steuersignalerzeugungsmittel ausgebildet sind, dass sie den ersten pneumatischen Steuerdruck und den zweiten pneumatischen Steuerdruck als einen gemeinsamen pneumatischen Steuerdruck (SD) erzeugen und aussteuern.

22. Elektronisch gesteuertes pneumatisches Betriebsbremssystem nach einem der vorhergehenden Ansprüche, **dadurch gekennzeichnet, dass** es ein elektronisch geregeltes Betriebsbremssystem mit Bremsdruckregelung (EBS) umfasst.

## Claims

1. Electronically controlled pneumatic operating brake system (1) having at least the following:
a) a first electronic control unit (EBS-ECU),
b) a first brake circuit having a first compressed air supply (C1) and a first control valve (1C-EPM);
c) a second brake circuit having a second compressed air supply (C2) independent from the first compressed air supply (C1) and a second control valve (2C-EPM), wherein the first brake circuit is supplied with compressed air from the first compressed air supply (C1) and the second brake circuit is supplied with compressed air from the second compressed air supply (C2), wherein
d) at least one first brake pressure is controllable by the first control valve (1C-EPM) at at least one first pneumatic operating output (10) of the first control valve (1C-EPM) in the first brake circuit based on compressed air from the first compressed air supply (C1), and at least one second brake pressure is controllable by the second control valve (2C-EPM) at at least one second pneumatic operating output (11) of the second control valve (2C-EPM) in the second brake circuit based on compressed air from the second compressed air supply (C2), wherein at least one pneumatic operating brake actuator of the first brake circuit is connected at the first pneumatic operating output (10) and at least one pneumatic operating brake actuator of the second brake circuit is connected at the second pneumatic operating output (11), and wherein
e) the first control valve (1C-EPM) has a first electrical control input (7) for receiving a first electrical control signal (SS1) and a first pneumatic control input (13) for receiving a first pneumatic control pressure (SD) and the second control valve (2C-EPM) has a second electrical control input (8) for receiving a second electrical control signal (SS2) and a second pneumatic control input (14) for receiving a second pneumatic control pressure (SD), and wherein
f) the first electronic control unit (EBS-ECU), as a function of a desired vehicle deceleration, generates the first electrical control signal (SS1) and feeds it to the first electrical control input (7) of the first control valve (1C-EPM) and generates the second electrical control signal (SS2) and feeds it to the second electrical control input (8) of the second control valve (2C-EPM), and wherein
g) control signal generation means are provided which, as a function of the desired vehicle deceleration, generate the first pneumatic control pressure (SD) and feed it to the first pneumatic control input (13) of the first control valve (1C-EPM) and generate the second pneumatic control pressure (SD) and feed it to the second pneumatic control input (14) of the second control valve (2C-EPM), **characterised in that**
h) at least one third compressed air consumer circuit is provided that is independent from the first brake circuit and the second brake circuit and supplied with compressed air by at least one third compressed air supply (C3) that is independent from the first compressed air supply (C1) and the second compressed air supply (C2), wherein
i) a pneumatic supply connection (23) of the control signal generation means is supplied with compressed air by a third supply pressure of the third compressed air supply (C3), and **in that**
j) the control signal generation means are configured to generate the first pneumatic control pressure (SD) and feed it to the first pneumatic control input (13) and generate the second pneumatic control pressure (SD) and feed it to the second pneumatic control input (14) based on the third supply pressure provided to the supply connection (16; 23).

2. Electronically controlled pneumatic operating brake system (1) having at least the following:
a) a first electronic control unit (EBS-ECU),
b) a first brake circuit having a first compressed air supply (C1) and a first control valve (1C-EPM);
c) a second brake circuit having a second compressed air supply (C2) independent from the first compressed air supply (C1) and a second control valve (2C-EPM), wherein the first brake circuit is supplied with compressed air from the first compressed air supply (C1) and the second brake circuit is supplied with compressed air from the second compressed air supply (C2), wherein
d) at least one first brake pressure is controllable by the first control valve (1C-EPM) at at least one first pneumatic operating output (10) of the first control valve (1C-EPM) in the first brake circuit based on compressed air from the first compressed air supply (C1), and at least one second brake pressure is controllable by the second control valve (2C-EPM) at at least one second pneumatic operating output (11) of the second control valve (2C-EPM) in the second brake circuit based on compressed air from the second compressed air supply (C2), wherein at least one pneumatic operating brake actuator of the first brake circuit is connected at the first pneumatic operating output (10) and at least one pneumatic operating brake actuator of the second brake circuit is connected at the second pneumatic operating output (11), and wherein
e) the first control valve (1C-EPM) has a first electrical control input (7) for receiving a first electrical control signal (SS1) and a first pneumatic control input (13) for receiving a first pneumatic control pressure (SD) and the second control valve (2C-EPM) has a second electrical control input (8) for receiving a second electrical control signal (SS2) and a second pneumatic control input (14) for receiving a second pneumatic control pressure (SD), and wherein
f) the first electronic control unit (EBS-ECU), as a function of a desired vehicle deceleration, generates the first electrical control signal (SS1) and feeds it to the first electrical control input (7) of the first control valve (1C-EPM) and generates the second electrical control signal (SS2) and feeds it to the second electrical control input (8) of the second control valve (2C-EPM), and wherein
g) control signal generation means are provided which, as a function of the desired vehicle deceleration, generate the first pneumatic control pressure (SD) and feed it to the first pneumatic control input (13) of the first
control valve (1C-EPM) and generate the second pneumatic control pressure (SD) and feed it to the second pneumatic control input (14) of the second control valve (2C-EPM), **characterised in that**
h) at least one third compressed air consumer circuit is provided that is independent from the first brake circuit and the second brake circuit and supplied with compressed air by at least one third compressed air supply (C3) that is independent from the first compressed air supply (C1) and the second compressed air supply (C2), wherein
i) a pneumatic supply connection (23) of the control signal generation means is supplied with compressed air by the respectively greater supply pressure of a first supply pressure in the first compressed air supply (C1) and a second supply pressure in the second compressed air supply (C2), and **in that**
j) the control signal generation means are configured to generate the first pneumatic control pressure (SD) and feed it to the first pneumatic control input (13) and generate the second pneumatic control pressure (SD) and feed it to the second pneumatic control input (14) based on the first or second supply pressure provided to the supply connection (16; 23).

3. Electronically controlled pneumatic operating brake system according to claim 1 or 2, **characterised in that** the desired vehicle deceleration is predetermined by an actuation of a foot brake pedal (4) of a foot brake module (FBM) and/or by an autopilot apparatus (21) and/or by a driver assist system.

4. Electronically controlled pneumatic operating brake system according to claim 2, **characterised in that** selection means (17) are provided which control the respectively greater pressure of the first supply pressure and the second supply pressure to the supply connection (16; 23) of the control signal generation means.

5. Electronically controlled pneumatic operating brake system according to claim 4, **characterised in that** the selection means (17) comprise a pneumatic switch valve of which a first input (19) is connected to the first compressed air supply (C1) and a second input (20) is connected to the second compressed air supply (C2) and an output (18) is connected to the supply connection (16; 23) of the control signal generation means.

6. Electronically controlled pneumatic operating brake system according to any one of claims 3 to 5, **characterised in that** the foot brake module (FBM) comprises a first electrical channel (3) in which, as a function of the actuation of the foot brake pedal (4), a first electric brake request signal (BAS1) is generated and fed to the first electronic control unit (EBS-ECU), which generates, as a function of the first brake request signal (BAS1), the first electrical control signal (SS1) and feeds it to the first electrical control input (7) and generates the second electrical control signal (SS2) and feeds it to the second electrical control input (8).

7. Electronically controlled pneumatic operating brake system according to claim 6, **characterised in that** the foot brake module (FBM) comprises at least one pneumatic channel (2), in particular only a single pneumatic channel (2) that is comprised in the control signal generation means and supplied with compressed air by the supply connection (16) and that generates the first pneumatic control pressure (SD) as a function of the actuation of the foot brake pedal (4) and feeds it to the first pneumatic control input (13) and generates the second pneumatic control pressure (SD) and feeds it to the second pneumatic control input (14).

8. Electronically controlled pneumatic operating brake system according to claim 6 or 7, **characterised in that** the foot brake module (FBM) comprises a second electrical channel (28) in which a second electrical brake request signal (BAS2) is generated as a function of the actuation of the foot brake pedal (4).

9. Electronically controlled pneumatic operating brake system according to any one of claims 3 to 8, **characterised in that** the autopilot apparatus (21) and/or the driver assist system, as a function of the desired vehicle deceleration, generates a first electrical brake request signal (BAS1*) and feeds it to the first electronic control unit (EBS-ECU), which generates, as a function of the first brake request signal (BAS1*), the first electrical control signal (SS1) and feeds it to the first electrical control input (7) and generates the second electrical control signal (SS2) and feeds it to the second electrical control input (8), and generates a second electrical brake request signal (BAS2*).

10. Electronically controlled pneumatic operating brake system according to claim 8 or 9, **characterised in that** the control signal generation means comprise a magnet valve apparatus (22) and a second electronic control unit (EBS-ECU-Redundant) which, as a function of the or a second electrical brake request signal (BAS2, BAS2*), generates a third electrical control signal (SS3) and feeds it to the magnet valve apparatus (22), which then, as a function of the third electrical control signal (SS3), generates the first pneumatic control pressure (SD) and feeds it to the first pneumatic control input (13) and generates the second pneumatic control pressure (SD) and feeds it to the second pneumatic control input (14).

11. Electronically controlled pneumatic operating brake system according to claim 10, **characterised in that** the first electronic control unit (EBS-ECU) is supplied with electrical energy by a first electrical energy supply (I) which is independent from a second electrical energy supply (II) that supplies the second electronic control unit (EBS-ECU-Redundant) with electrical energy.

12. Electronically controlled pneumatic operating brake system according to claim 10 or 11, **characterised in that** the second electronic control unit (EBS-ECU-Redundant) provides redundancy for the first electronic control unit (EBS-ECU) when the first electronic control unit (EBS-ECU) or a first electrical energy supply (I) of the first electronic control unit (EBS-ECU) malfunctions or fails and the at least one first brake pressure is then generated based on the first pneumatic control pressure (SD) and the at least one second brake pressure is generated based on the second pneumatic control pressure (SD).

13. Electronically controlled pneumatic operating brake system according to any one of claims 10 to 12, **characterised in that** the magnet valve apparatus (22) is supplied with compressed air by the supply connection (23) and comprises an inlet/outlet magnet valve combination for increasing, maintaining and decreasing the first pneumatic control pressure (SD) and the second pneumatic control pressure (SD) as a function of the third electrical control signal (SS3).

14. Electronically controlled pneumatic operating brake system according to any one of claims 10 to 13, **characterised in that** the control signal generation means comprise at least one pressure sensor (27) that transmits a first pneumatic control pressure (SD) output by the magnet valve apparatus (22) and/or transmits an actual pressure value corresponding to the second pneumatic control pressure (SD) to the second electronic control unit (EBS- ECU-Redundant), which controls the magnet valve apparatus (22) in a closed control loop so as to regulate the actual pressure value to match a desired pressure value which is a function of the second electrical brake request signal (BAS2).

15. Electronically controlled pneumatic operating brake system according to any one of the preceding claims, **characterised in that** the control signal generation means are configured to feed the first pneumatic control pressure (SD) and/or the second pneumatic control pressure (SD) to a third pneumatic control input (15) of an electro-pneumatic trailer control module (TCM) to control the brakes of a trailer, wherein the trailer control module (TCM) is electrically controlled by a third electrical control signal (SST) of the first electronic control unit (EBS-ECU), wherein the third electrical control signal (SST) represents a desired value for a trailer brake pressure.

16. Electronically controlled pneumatic operating brake system according to any one of the preceding claims, **characterised in that** the first electrical control signal (SS1) represents a first desired value for the first brake pressure and the second electrical control signal (SS2) represents a second desired value for the second brake pressure.

17. Electronically controlled pneumatic operating brake system according to any one of the preceding claims, **characterised in that** the first control valve (1C-EPM) and/or the second control valve (2C-EPM) is formed by or includes at least the following: a one-channel pressure regulation module (1C-EPM) or a two-channel pressure regulation module (2C-EPM), each channel having: a relay valve, an inlet/outlet magnet valve combination that pneumatically pilot-controls the relay valve, an electronic control device connected to the first electrical control input (7) or the second electrical control input (8), which electronic control device electrically controls the inlet/outlet magnet valve combination as a function of the first electrical control signal (SS1) or the second electrical control signal (SS2) to generate a pneumatic pilot pressure for the relay valve, which generates an actual value for the first brake pressure or the second brake pressure as a function of the pneumatic pilot pressure, and having at least one pressure sensor that transmits the actual value to the at least one electronic control device so that the latter controls the inlet/outlet magnet valve combination electrically to match the actual value to the desired value, and a backup magnet valve which is electrically controlled by the electronic control device and which creates a connection between the first pneumatic control input (13) and the first pneumatic operating output (10) or between the second pneumatic control input (14) and the second pneumatic operating output (11) when the magnet valve is without electrical current and blocks such a connection when the magnet valve is provided with current.

18. Electronically controlled pneumatic operating brake system according to any one of the preceding claims, **characterised in that** the first brake circuit is a front axle brake circuit and the second brake circuit is a rear axle brake circuit.

19. Electronically controlled pneumatic operating brake system according to any one of the preceding claims, **characterised in that** the at least one first operating output (10) of the first control valve (1C-EPM) is connected to at least one first pneumatic operating brake cylinder (BZ) and the at least one second operating output (11) of the second control valve (2C-EPM) is connected to at least one second pneumatic operating brake cylinder (BZ).

20. Electronically controlled pneumatic operating brake system according to claim 1, **characterised in that** the third compressed air consumer circuit is an auxiliary consumer circuit or a trailer brake circuit.

21. Electronically controlled pneumatic operating brake system according to any one of the preceding claims, **characterised in that** the control signal generation means are configured to generate and output the first pneumatic control pressure and the second pneumatic control pressure as a common pneumatic control pressure (SD).

22. Electronically controlled pneumatic operating brake system according to any one of the preceding claims, **characterised in that** it comprises an electronically regulated operating brake system with brake pressure regulation (EBS).

## Revendications

1. Système de frein de service (1) pneumatique à commande électronique qui présente au moins ce qui suit :
a) une première commande électronique (EBS-ECU),
b) un premier circuit de freinage avec une première réserve d'air comprimé (C1) et avec une première soupape de commande (1C-EPM),
c) un second circuit de freinage avec une deuxième réserve d'air comprimé (C2) indépendante de la première réserve d'air comprimé (C1) et avec une seconde soupape de commande (2C-EPM), dans lequel le premier circuit de freinage est alimenté en air comprimé par la première réserve d'air comprimé (C1) et le second circuit de freinage est alimenté en air comprimé par la deuxième réserve d'air comprimé (C2), dans lequel
d) dans le premier circuit de freinage, sur la base d'air comprimé provenant de la première réserve d'air comprimé (C1), au moins une première pression de freinage peut être réglée au niveau d'au moins une première sortie de travail pneumatique (10) de la première soupape de commande (1C-EPM) par la première soupape de commande (1C-EPM) et dans le second circuit de freinage, sur la base d'air comprimé provenant de la deuxième réserve d'air comprimé (C2), au moins une seconde pression de freinage peut être réglée au niveau d'au moins une seconde sortie de travail pneumatique (11) de la seconde soupape de commande (2C-EPM) par la seconde soupape de commande (2C-EPM), dans lequel au moins un actionneur de frein de service pneumatique du premier circuit de freinage est raccordé à la première sortie de travail pneumatique (10) et au moins un actionneur de frein de service pneumatique du second circuit de freinage est raccordé à la seconde sortie de travail pneumatique (11), et dans lequel
e) la première soupape de commande (1C-EPM) présente une première entrée de commande électrique (7) pour la réception d'un premier signal de commande électrique (SS1) et une première entrée de commande pneumatique (13) pour la réception d'une première pression de commande pneumatique (SD) et la seconde soupape de commande (2C-EPM) présente une seconde entrée de commande électrique (8) pour la réception d'un second signal de commande électrique (SS2) et une deuxième entrée de commande pneumatique (14) pour la réception d'une seconde pression de commande pneumatique (SD), et dans lequel
f) la première commande électronique (EBS-ECU) génère le premier signal de commande électrique (SS1) en fonction d'une décélération de consigne de véhicule et l'injecte dans la première entrée de commande électrique (7) de la première soupape de commande (1C-EPM) et génère le deuxième signal de commande électrique (SS2) et l'injecte dans la seconde entrée de commande électrique (8) de la seconde soupape de commande (2C-EPM), et dans lequel
g) des moyens de génération de signaux de commande sont prévus, lesquels génèrent la première pression de commande pneumatique (SD) en fonction de la décélération de consigne de véhicule et l'injectent dans la première entrée de commande pneumatique (13) de la première soupape de commande (1C-EPM) et génèrent la seconde pression de commande pneumatique (SD) et l'injectent dans la deuxième entrée de commande pneumatique (14) de la seconde soupape de commande (2C-EPM), **caractérisé en ce que**
h) au moins un troisième circuit de consommateur d'air comprimé indépendant du premier circuit de freinage et du second circuit de freinage est prévu, circuit qui est alimenté en air comprimé par au moins une troisième réserve d'air comprimé (C3) qui est indépendante de la première réserve d'air comprimé (C1) et de la deuxième réserve d'air comprimé (C2), dans lequel
i) un raccord d'alimentation pneumatique (23) des moyens de génération de signaux de commande est alimenté en air comprimé par une troisième pression de réserve de la troisième réserve d'air comprimé (C3), et **en ce que**
j) les moyens de génération de signaux de commande sont configurés afin qu'ils génèrent la première pression de commande pneumatique (SD) sur la base de la troisième pression de réserve au raccord d'alimentation (16 ; 23) et l'injectent dans la première entrée de commande pneumatique (13) ainsi que la seconde pression de commande pneumatique (SD) et l'injectent dans la seconde entrée de commande pneumatique (14).

2. Système de frein de service (1) pneumatique à commande électronique qui présente au moins ce qui suit :
a) une première commande électronique (EBS-ECU),
b) un premier circuit de freinage avec une première réserve d'air comprimé (C1) et avec une première soupape de commande (1C-EPM),
c) un second circuit de freinage avec une deuxième réserve d'air comprimé (C2) indépendante de la première réserve d'air comprimé (C1) et avec une seconde soupape de commande (2C-EPM), dans lequel le premier circuit de freinage est alimenté en air comprimé par la première réserve d'air comprimé (C1) et le second circuit de freinage est alimenté en air comprimé par la deuxième réserve d'air comprimé (C2), dans lequel
d) dans le premier circuit de freinage, sur la base d'air comprimé provenant de la première réserve d'air comprimé (C1), au moins une première pression de freinage peut être réglée au niveau d'au moins une première sortie de travail pneumatique (10) de la première soupape de commande (1C-EPM) par la première soupape de commande (1C-EPM) et dans le second circuit de freinage, sur la base d'air comprimé provenant de la deuxième réserve d'air comprimé (C2), au moins une seconde pression de freinage peut être réglée au niveau d'au moins une seconde sortie de travail pneumatique (11) de la seconde soupape de commande (2C-EPM) par la seconde soupape de commande (2C-EPM), dans lequel au moins un actionneur de frein de service pneumatique du premier circuit de freinage est raccordé à la première sortie de travail pneumatique (10) et au moins un actionneur de frein de service pneumatique du second circuit de freinage est raccordé à la seconde sortie de travail pneumatique (11), et dans lequel
e) la première soupape de commande (1C-EPM) présente une première entrée de commande électrique (7) pour la réception d'un premier signal de commande électrique (SS1) et une première entrée de commande pneumatique (13) pour la réception d'une première pression de commande pneumatique (SD) et la seconde soupape de commande (2C-EPM) présente une seconde entrée de commande électrique (8) pour la réception d'un deuxième signal de commande électrique (SS2) et une deuxième entrée de commande pneumatique (14) pour la réception d'une seconde pression de commande pneumatique (SD), et dans lequel
f) la première commande électronique (EBS-ECU) génère le premier signal de commande électrique (SS1) en fonction d'une décélération de consigne de véhicule et l'injecte dans la première entrée de commande électrique (7) de la première soupape de commande (1C-EPM) et génère le deuxième signal de commande électrique (SS2) et l'injecte dans la seconde entrée de commande électrique (8) de la seconde soupape de commande (2C-EPM), et dans lequel
g) des moyens de génération de signaux de commande sont prévus, lesquels génèrent la première pression de commande pneumatique (SD) en fonction de la décélération de consigne de véhicule et l'injectent dans la première entrée de commande pneumatique (13) de la première
soupape de commande (1C-EPM) et génèrent la seconde pression de commande pneumatique (SD) et l'injectent dans la deuxième entrée de commande pneumatique (14) de la seconde soupape de commande (2C-EPM), **caractérisé en ce que**
h) au moins un troisième circuit de consommateur d'air comprimé indépendant du premier circuit de freinage et du second circuit de freinage est prévu, circuit qui est alimenté en air comprimé par au moins une troisième réserve d'air comprimé (C3) qui est indépendante de la première réserve d'air comprimé (C1) et de la deuxième réserve d'air comprimé (C2), dans lequel
i) un raccord d'alimentation pneumatique (23) des moyens de génération de signaux de commande est alimenté en air comprimé par la pression de réserve respectivement supérieure entre une première pression de réserve dans la première réserve d'air comprimé (C1) et une seconde pression de réserve dans la deuxième réserve d'air comprimé (C2), et **en ce que**
j) les moyens de génération de signaux de commande sont configurés afin qu'ils génèrent la première pression de commande pneumatique (SD) sur la base de la première ou seconde pression de réserve au raccord d'alimentation (16 ; 23) et l'injectent dans la première entrée de commande pneumatique (13) ainsi que génèrent la seconde pression de commande pneumatique (SD) et l'injectent dans la deuxième entrée de commande pneumatique (14).

3. Système de frein de service pneumatique à commande électronique selon la revendication 1 ou 2, **caractérisé en ce que** la décélération de consigne de véhicule est prédéterminée par un actionnement d'une pédale de frein au pied (4) d'un module de freinage au pied (FBM) et/ou d'un dispositif de pilotage automatique (21) et/ou d'un système d'assistance au conducteur.

4. Système de frein de service pneumatique à commande électronique selon la revendication 2, **caractérisé en ce que**des moyens de sélection (17) sont prévus, moyens qui commandent la pression respectivement supérieure entre la première pression de réserve et la seconde pression de réserve au niveau du raccord d'alimentation (16 ; 23) des moyens de génération de signaux de commande.

5. Système de frein de service pneumatique à commande électronique selon la revendication 4, **caractérisé en ce que** les moyens de sélection (17) comprennent une soupape de commutation pneumatique, par laquelle une première entrée (19) est raccordée à la première réserve d'air comprimé (C1) et une seconde entrée (20) est raccordée à la deuxième réserve d'air comprimé (C2) et une sortie (18) est raccordée au raccord d'alimentation (16 ; 23) des moyens de génération de signaux de commande.

6. Système de frein de service pneumatique à commande électronique selon l'une quelconque des revendications 3 à 5, **caractérisé en ce que** le module de freinage au pied (FBM) comprend un premier canal électrique (3) dans lequel, en fonction de l'actionnement de la pédale de frein au pied (4), un premier signal d'exigence de freinage électrique (BAS1) est généré et injecté dans la première commande électronique (EBS-ECU) qui génère le premier signal de commande électrique (SS1) en fonction du premier signal d'exigence de freinage (BAS1) et l'injecte dans la première entrée de commande électrique (7) et génère le deuxième signal de commande électrique (SS2) et l'injecte dans la seconde entrée de commande électrique (8),

7. Système de frein de service pneumatique à commande électronique selon la revendication 6, **caractérisé en ce que** le module de freinage au pied (FBM) comprend au moins un canal pneumatique (2), en particulier seulement un seul canal pneumatique (2) qui est compris dans les moyens de génération de signaux de commande et est alimenté en air comprimé par le raccord d'alimentation et génère la première pression de commande pneumatique (SD) en fonction de l'actionnement de la pédale de frein au pied (4) et l'injecte dans la première entrée de commande pneumatique (13) et génère la seconde pression de commande pneumatique (SD) et l'injecte dans la deuxième entrée de commande pneumatique (14).

8. Système de frein de service pneumatique à commande électronique selon la revendication 6 ou 7, **caractérisé en ce que** le module de freinage au pied (FBM) comprend un second canal électrique (28) dans lequel un second signal d'exigence de freinage électrique (BAS2) est généré en fonction de l'actionnement de la pédale de frein au pied (4).

9. Système de frein de service pneumatique à commande électronique selon l'une quelconque des revendications 3 à 8, **caractérisé en ce que** le dispositif de pilotage automatique (21) et/ou le système d'assistance au conducteur génère un premier signal d'exigence de frein électrique (BAS1*) en fonction de la décélération de consigne de véhicule et l'injecte dans la première commande électronique (EBS-ECU) qui génère le premier signal de commande électrique (SS1) en fonction du premier signal d'exigence de freinage (BAS1*) et l'injecte dans la première entrée de commande électrique (7) et génère le deuxième signal de commande électrique (SS2) et l'injecte dans la seconde entrée de commande électrique (8), ainsi que génère un second signal d'exigence de freinage électrique (BAS2*).

10. Système de frein de service pneumatique à commande électronique selon la revendication 8 ou 9, **caractérisé en ce que** les moyens de génération de signaux de commande comprennent un dispositif de soupape magnétique (22) ainsi qu'une seconde commande électronique (EBS-ECU-Redundant) qui génère un troisième signal de commande électrique (SS3) en fonction du ou d'un second signal d'exigence de freinage électrique (BAS2, BAS2*) et l'injecte dans le dispositif de soupape magnétique (22) qui génère ensuite la première pression de commande pneumatique (SD) en fonction du troisième signal de commande électrique (SS3) et l'injecte dans la première entrée de commande pneumatique (13) et génère la seconde pression de commande pneumatique (SD) et l'injecte dans la deuxième entrée de commande pneumatique (14).

11. Système de frein de service pneumatique à commande électronique selon la revendication 10, **caractérisé en ce que** la première commande électronique (EBS-ECU) est alimentée en énergie électrique par une première alimentation en énergie électrique (I) qui est indépendante d'une seconde alimentation en énergie électrique (II) par laquelle la seconde commande électronique (EBS- ECU-Redundant) est alimentée en énergie électrique.

12. Système de frein de service pneumatique à commande électronique selon la revendication 10 ou 11, **caractérisé en ce que** la seconde commande électronique (EBS-ECU-Redundant) réalise une redondance pour la première commande électronique (EBS-ECU) lorsque la première commande électronique (EBS-ECU) ou une première alimentation en énergie électrique (I) de la première commande électronique (EBS-ECU) présente une erreur ou est en panne et ensuite la au moins une première pression de freinage est générée sur la base de la première pression de commande pneumatique (SD) et la au moins une seconde pression de freinage est générée sur la base de la seconde pression de commande pneumatique (SD).

13. Système de frein de service pneumatique à commande électronique selon l'une quelconque des revendications 10 à 12, **caractérisé en ce que** le dispositif de soupape magnétique (22) est alimenté en air comprimé par le raccord d'alimentation (23) et comprend une combinaison de soupape magnétique d'entrée/et de sortie pour l'augmentation, le maintien et la diminution de la première pression de commande pneumatique (SD) et de la seconde pression de commande pneumatique (SD) en fonction du troisième signal de commande électrique (SS3).

14. Système de frein de service pneumatique à commande électronique selon l'une quelconque des revendications 10 à 13, **caractérisé en ce que** les moyens de génération de signaux de commande comprennent au moins un capteur de pression (27) qui signale une première pression de commande pneumatique (SD) réglée par le dispositif de soupape magnétique (22) et/ou transmet une valeur de pression réelle correspondant à la seconde pression pneumatique (SD) à la seconde commande électronique (EBS- ECU-Redundant) qui commande dans un circuit de commande fermé le dispositif de soupape magnétique (22) afin de réguler la valeur de pression réelle sur une valeur de pression de consigne qui est dépendante du second signal d'exigence de freinage électrique (BAS2).

15. Système de frein de service pneumatique à commande électronique selon l'une quelconque des revendications précédentes, **caractérisé en ce que** les moyens de génération de signaux de commande sont configurés afin qu'ils injectent la première pression de commande pneumatique (SD) et/ou la seconde pression de commande pneumatique (SD) dans une troisième entrée de commande pneumatique (15) d'un module de commande de remorque (TCM) électropneumatique pour la commande du freinage d'une remorque, dans lequel le module de commande de remorque (TCM) est commandé électriquement par un troisième signal de commande électrique (SST) de la première commande électronique (EBS-ECU), dans lequel le troisième signal de commande électrique (SST) représente une valeur de consigne pour une pression de freinage de remorque.

16. Système de frein de service pneumatique à commande électronique selon l'une quelconque des revendications précédentes, **caractérisé en ce que** le premier signal de commande électrique (SS1) représente une première valeur de consigne pour la première pression de freinage et le second signal de commande électrique (SS2) représente une seconde valeur de consigne pour la seconde pression de freinage.

17. Système de frein de service pneumatique à commande électronique selon l'une quelconque des revendications précédentes, **caractérisé en ce que** la première soupape de commande (1C-EPM) et/ou la seconde soupape de commande (2C-EPM) est formée au moins par ce qui suit ou contient au moins ce qui suit : un module de régulation de pression à 1 canal (1C-EPM) ou un module de régulation de pression à 2 canaux (2C-EPM) avec chacun un canal : une soupape relais, une combinaison de soupape magnétique d'entrée/de sortie qui précommande pneumatiquement la soupape relais, un appareil de commande électronique raccordé à la première entrée de commande électrique (7) ou à la seconde entrée de commande électrique (8), appareil qui commande électriquement la combinaison magnétique de soupape d'entrée/de sortie en fonction du premier signal de commande électrique (SS1) ou du second signal de commande électrique (SS2) afin de générer une pression de précommande pneumatique pour la soupape relais qui génère en fonction de la pression de précommande pneumatique une valeur réelle pour la première pression de freinage ou la seconde pression de freinage, et avec au moins capteur de pression qui signale la valeur réelle à l'au moins un appareil de commande électronique afin que celui-ci commande électriquement la combinaison magnétique de soupape d'entrée et de sortie afin d'adapter la valeur réelle à la valeur de consigne, ainsi qu'avec une soupape magnétique de secours commandée électriquement par l'appareil de commande électronique qui crée hors tension une liaison entre la première entrée de commande pneumatique (13) et la première sortie de travail pneumatique (10) ou entre la seconde entrée de commande pneumatique (14) et la seconde sortie de travail pneumatique (11) et bloque sous tension une telle liaison.

18. Système de frein de service pneumatique à commande électronique selon l'une quelconque des revendications précédentes, **caractérisé en ce que** le premier circuit de freinage est un circuit de freinage d'essieu avant et le second circuit de freinage est un circuit de freinage d'essieu arrière.

19. Système de frein de service pneumatique à commande électronique selon l'une quelconque des revendications précédentes, **caractérisé en ce que** l'au moins une première sortie de travail (10) de la première soupape de commande (1C-EPM) est reliée à au moins un premier cylindre de frein de service pneumatique (BZ) et l'au moins une seconde sortie de travail (11) de la seconde soupape de commande (2C-EPM) est reliée à au moins un second cylindre de frein de service pneumatique (BZ).

20. Système de frein de service pneumatique à commande électronique selon la revendication 1, **caractérisé en ce que** le troisième circuit de consommateur d'air comprimé est un circuit de consommateur secondaire ou un circuit de freinage de remorque.

21. Système de frein de service pneumatique à commande électronique selon l'une quelconque des revendications précédentes, **caractérisé en ce que** les moyens de génération de signaux de commande sont configurés afin qu'ils génèrent et règlent la première pression de commande pneumatique et la seconde pression de commande pneumatique comme une pression de commande pneumatique (SD) commune.

22. Système de frein de service pneumatique à commande électronique selon l'une quelconque des revendications précédentes, **caractérisé en ce qu'**il comprend un système de frein de service à régulation électronique avec régulation de pression de freinage (EBS).
